(19) Europäisches Patentamt
European Patent Office
Office européen des brevets

(11) EP 3 133 093 A1

(12) **EUROPEAN PATENT APPLICATION**

(43) Date of publication:
**22.02.2017 Bulletin 2017/08**

(21) Application number: **15181760.8**

(22) Date of filing: **20.08.2015**

(51) Int Cl.:
***C08F 236/06*** *(2006.01)* ***C08F 4/48*** *(2006.01)*
*C08F 212/08* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Trinseo Europe GmbH
8810 Horgen (CH)**

(72) Inventors:
- **Döring, Christian
04420 Markranstädt (DE)**
- **Heidenreich, Daniel
06110 Halle (DE)**

(74) Representative: **Hoffmann Eitle
Patent- und Rechtsanwälte PartmbB
Arabellastraße 30
81925 München (DE)**

(54) **ELASTOMERIC POLYMER**

(57) The present invention relates to a process for the preparation of an elastomeric polymer, comprising steps (i) of providing and (ii) polymerizing at least one conjugated diene monomer and, optionally, one or more aromatic vinyl monomer in the presence of a polymerization initiator according to Formula 1 to provide a living polymer chain.

The present invention also relates to elastomeric polymers that are obtainable according to the above process. In yet another embodiment, the present invention relates to a composition comprising the elastomeric polymer and, optionally, further constituents such as oil, filler and/or a vulcanizing agent. The invention further relates to a process for the preparation of a cross-linked elastomeric polymer comprising the step of adding a vulcanizing agent to the elastomeric polymer. Moreover, cross-linked elastomeric polymers thus obtainable as well as articles and compositions comprising the elastomeric polymer, the cross-linked elastomeric polymer or both are described. The present invention further relates to a polymerization initiator that is useful in the process for the preparation of the elastomeric polymer described herein.

EP 3 133 093 A1

## Description

The present invention relates to a process for the preparation of an elastomeric polymer, comprising steps (i) of providing and (ii) polymerizing at least one conjugated diene monomer and, optionally, one or more aromatic vinyl monomer in the presence of a polymerization initiator according to Formula 1 to provide a living polymer chain.

The present invention also relates to elastomeric polymers that are obtainable according to the above process. In yet another embodiment, the present invention relates to a composition comprising the elastomeric polymer and, optionally, further constituents such as oil, filler and/or a vulcanizing agent. The invention further relates to a process for the preparation of a cross-linked elastomeric polymer comprising the step of adding a vulcanizing agent to the elastomeric polymer. Moreover, cross-linked elastomeric polymers thus obtainable as well as articles and compositions comprising the elastomeric polymer, the cross-linked elastomeric polymer or both are described. The present invention further relates to a polymerization initiator that is useful in the process for the preparation of the elastomeric polymer described herein.

Typical key characteristics of a tire tread are the rolling resistance, wet grip and the abrasion resistance. It is very challenging to improve the abrasion resistance without deteriorating the rolling resistance or the wet grip. An improved abrasion resistance of a tire tread contributes to an increased lifetime of the tire. When elastomers, such as polybutadiene or styrene-butadiene-copolymers, with a relatively low glass transition temperature are used in a tire tread compound, a reduced abrasion resistance and rolling resistance are observed whereas the wet grip is deteriorated. In contrast, the use of an elastomer with a relatively high glass transition temperature in a tire tread compound results in an improved wet grip, whereas the abrasion resistance and the rolling resistance are negatively affected.

Elastomeric polymers obtained by anionic polymerization processes mainly contain linear polymer chains. Highly linear elastomeric polymer chains show high solution viscosities and cold flow properties. To overcome these drawbacks, coupling processes have been applied to generate at least partially branching of the polymer chains. Commonly used coupling agents are divinylbenzene, halide or alkoxide compounds of tin or silicon. However, branched or star shaped polymers which result from such coupling reactions often exhibit increased hysteresis loss or decreased abrasion resistance.

WO 2007/047943 describes the use of a silane sulfide omega chain end modifier to produce a chain end-modified elastomeric polymer which is used as component in a vulcanized elastomeric polymer composition or a tire tread. According to WO 2007/047943, a silane sulfide compound is reacted with anionically-initiated living polymers to produce "chain end-modified" polymers, which are subsequently blended with fillers, vulcanizing agents, accelerators or oil extenders to produce a vulcanized elastomeric polymer composition having low hysteresis loss.

The vulcanized elastomeric polymer compositions are described as exhibiting lower tan $\delta$ values at 60°C, particularly as compared to compounds based on corresponding non-modified polymers, without negatively affecting tan $\delta$ values at 0°C and processing characteristics, such as compound Mooney values. Lower values of tan $\delta$ at 60°C correspond to a lower rolling resistance, whereas a higher tan $\delta$ at 0°C corresponds to an improved wet grip of a tire. Exemplary cured polymer formulations have been shown to result in reduced tan $\delta$ at 60°C and heat build-up values but equivalent tan $\delta$ values at 0°C. They are described as being useful in preparing tire treads having lower rolling resistance, while maintaining good wet grip properties. Although cured rubber hysteresis properties can be improved significantly through application of the technology described in WO 2007/047943, the impact of the technology is limited. In particular, there is a need to further improve abrasion resistance of the products comprising such polymers.

There is a further need for polymerization initiators that help to yield polymers for the preparation of compositions and articles with improved properties.

In a first aspect, the present invention therefore relates to an initiator that is useful in a process for the preparation of an elastomeric polymer. The present invention further relates to a process for the preparation of an elastomeric polymer, said process comprising steps (i) and (ii):

(i) providing and (ii) polymerizing at least one conjugated diene monomer and, optionally, one or more aromatic vinyl monomer in the presence of a polymerization initiator according to Formula 1:

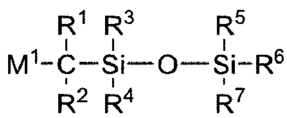

(Formula 1)

wherein in Formula 1: M1 is selected from lithium, sodium and potassium; R1 and R2 are each independently

selected from hydrogen, (C1-C18) alkyl, (C6-C18) aryl and (C7-C18) alkylaryl; R3, R4, R5, R6 and R7 are each independently selected from (C1-C18) alkyl, (C6-C18) aryl and (C7-C18) alkylaryl;
to provide a living polymer chain.

The process described herein can be carried out as a batch process or as a continuous process or under semi-continuous polymerization conditions. The terms "process", "polymerization" or similar terms as used herein refer to a polymerization process in which at least one conjugated diene monomer and, optionally, one or more aromatic vinyl monomer(s) and/or the ingredients necessary to perform the polymerization reaction, are dosed to a reactor in specified ratios. Generally applicable information about the polymerization technologies including polar coordinator compounds and accelerators, each of which helps to increase the reactivity of the initiator, to randomly arrange aromatic vinyl compounds, to arrange the ratio of the 1,2-polydiene,1,4-polydiene and 3,4-polydiene units introduced in the polymer; the amounts of each compound; monomer(s); and suitable process conditions are described in WO 2009/148932, fully incorporated herein by reference. In a continuous process, dosing is performed in a continuous manner. In such a process, typically, two or more polymerization reactors connected in series are used. In a preferred embodiment, steps (i) and (ii) as well as optional step (iii), which is described herein below, are carried out in reaction vessels connected in series.

Steps (i) and (ii) can be performed in more than one reactor vessel but, preferably, they are performed in one reactor vessel. Preferably, the flow of the solvent (if present), the at least one conjugated diene monomer and, optionally, the one or more aromatic vinyl monomer, and all the ingredients necessary to perform the polymerization reaction (including the polymerization initiator according to Formula 1) are adjusted such that the mean residence time of the reaction mixture during steps (i) and (ii) and, optionally, step (iii) is in the range of from 30 to 150 minutes. If steps (i) and (ii) on the one hand and optional step (iii) on the other hand are carried out in individual, subsequent reaction vessels, it is thus preferred that the flow rates are adjusted in order to achieve residence times of from 30 to 150 minutes in each reaction vessel. In one embodiment, the residence times may range from 30 to 90 minutes. In another embodiment, the residence times may range from 90 to 150 minutes.

The monomers provided in step (i) of the process according to the present invention include at least one conjugated diene monomer. Representative conjugated diene monomers include, but are not limited to, 1,3-butadiene, 2-alkyl-1,3-butadiene, 2-methyl-1,3-butadiene, 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and/or 1,3-cyclooctadiene. Preferred conjugated dienes include, but are not limited to, 1,3-butadiene, isoprene, and combinations thereof. 1,3-butadiene is the preferred conjugated diene monomer.

In addition to the at least one conjugated diene monomer, other polymerizable monomers may additionally be provided in steps (i) and (ii). Suitable examples of additional monomers include without limitation olefins and nonconjugated diolefins, such as $C_2$-$C_{20}$ $\alpha$-olefins and non-conjugated $C_4$-$C_{20}$ diolefins, especially norbornadiene, ethylidenenorbornene, 1,4-hexadiene, 1,5-hexadiene, 1,7-octadiene, 4-vinylcyclohexene and divinylbenzene including 1,2-divinylbenzene, 1,3-divinylbenzene and 1,4-divinylbenzene and mixtures thereof.

In a preferred embodiment, the present invention relates to a process wherein in step (i) one or more aromatic vinyl monomers are provided as additional monomer(s). Representative examples of aromatic vinyl monomers include, but are not limited to, styrene and its derivatives, including, but not limited to styrene, C1-4 alkyl-substituted styrene, such as 2-methylstyrene, 3-methylstyrene, 4-methylstyrene, 2,4-dimethylstyrene, 2,4,6-trimethylstyrene, $\alpha$-methylstyrene and stilbene, 2,4-diisopropylstyrene, 4-tert-butylstyrene, N,N-dimethylvinyl-4-aniline, N,N-dimethylaminoethyl styrene, tert-butoxystyrene and vinylpyridine and a combination of two or more thereof. Preferred aromatic vinyl monomers include styrene, 4-methyl styrene, $\alpha$-methylstyrene and a combination thereof. Styrene is a particularly preferred aromatic vinyl monomer.

In one embodiment of the present invention, the process comprises the polymerization of conjugated dienes, preferably 1,3-butadiene or isoprene to give a homopolymer. In a further embodiment, the process involves the polymerization of at least one conjugated diene, preferably 1,3-butadiene or isoprene, with at least one conjugated diene; and/or with at least one aromatic -olefin, preferably with at least one aromatic vinyl monomer, more preferably with styrene, $\alpha$-methylstyrene or 4-methylstyrene; and/or with at least one aromatic diolefin, preferably divinylbenzene, to give random or block co- or terpolymers.

In a preferred embodiment of the present invention, step (ii) of polymerizing at least one conjugated diene monomer is carried out in an organic solvent. The solvent used in accordance with the invention is preferably an organic solvent suitable for anionic polymerization reactions. Throughout the polymerization, the polymer chain-end is anionic or "living".

In the process according to the present invention, a polymer comprising a living polymer chain is obtained during step (ii). For the purposes of this invention, this polymer is also referred to as living polymer.

In a preferred embodiment of the invention, the method of making the polymer is carried out in a polymerization solvent as a solution polymerization, wherein the polymer formed is substantially soluble in the reaction mixture, or as

a suspension/slurry polymerization, wherein the polymer formed is substantially insoluble in the reaction medium. The solution polymerization usually takes place at relatively low pressures, preferably below 10 MPa, preferably in a temperature range of from 0 to 120°C. In one embodiment, the polymerization solvent is selected from non-polar aromatic and non-aromatic solvents including butene, butane, pentane, cyclohexane, isopar, hexane, heptane, octane, benzene and toluene. In a preferred embodiment, the solvent is selected from one or more of butane, pentane, cyclohexane, hexane, and heptane. If a solvent is used in accordance with the invention, the solid content of monomers is preferably of from 5-30 % by weight, preferably from 8-27 % by weight, more preferably from 10-24 % by weight, based on the total weight of monomers and solvent. The terms "total solid content of monomers", "solid content of monomers" or similar terms as used herein refer to the total mass (or weight) percentage of monomers based on the total weight of solvent and monomers (e.g. butadiene and styrene).

The polymerization initiator used to start the polymerization reaction in accordance with the present invention is a compound according to Formula 1:

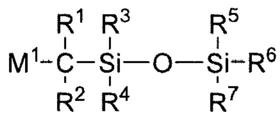

(Formula 1)

wherein in Formula 1: $M^1$ is selected from lithium, sodium and potassium; $R^1$ and $R^2$ are each independently selected from hydrogen, (C1-C18) alkyl, ($C_6$-$C_{18}$) aryl and ($C_7$-$C_{18}$) alkylaryl; $R^3$, $R^9$, $R^5$, $R^6$ and $R^7$ are each independently selected from ($C_1$-$C_{18}$) alkyl, ($C_6$-$C_{18}$) aryl and ($C_7$-$C_{18}$) alkylaryl.

In a preferred embodiment, $M^1$ in Formula 1 is lithium and $R^1$ and $R^2$ in formula 1 are independently selected from hydrogen and ($C_1$-$C_{18}$) alkyl. In a particularly preferred embodiment of the present invention, the polymerization initiator is selected from the following group of compounds:

Li-($CH_2$)-Si(Me)$_2$-O-Si(Me)$_3$, Li-($CH_2$)-Si(Me)$_2$-O-Si(Et)$_3$, Li-($CH_2$)-Si(Me)$_2$-O-Si(Pr)$_3$, Li-($CH_2$)-Si(Me)$_2$-O-Si(Bu)$_3$, Li-($CH_2$)-Si(Me)$_2$-O-Si($C_6H_{13}$)$_3$, Li- ($CH_2$)-Si (Me) $_2$-O-Si(Ph)$_3$, Li-($CH_2$)-Si(Me)$_2$-O-Si($CH_2$Ph)$_3$, Li-($CH_2$)-Si(Me)$_2$-O-Si(Me)$_2$(Et), Li-($CH_2$)-Si(Me)$_2$-O-Si(Me)$_2$(Pr), Li-($CH_2$)-Si(Me)$_2$-O-Si(Me)$_2$(Bu), Li-($CH_2$)-Si(Me)$_2$-O-Si(Me)$_2$($C_6H_{13}$), Li-($CH_2$)-Si(Me)$_2$-O-Si(Me)$_2$($C_8H_{17}$), Li- ($CH_2$)-Si (Me) $_2$-O-Si(Me)$_2$($C_{10}H_{21}$), Li- ($CH_2$)-Si (Me) $_2$-O-Si(Me)$_2$($C_{12}H_{25}$), Li- ($CH_2$)-Si (Me) $_2$-O-Si(Me) $_2$($C_{18}H_{37}$), Li-($CH_2$)-Si(Me)$_2$-O-Si(Me)$_2$($C_6H_{11}$), Li-($CH_2$)-Si(Me)$_2$-O-Si(Me)$_2$(Ph), Li-($CH_2$)-Si(Me)$_2$-O-Si(Me)$_2$($CH_2$Ph), Li-($CH_2$)-Si(Me)$_2$-O-Si(Me)$_2$[($CH_2$)$_2$Ph], Li-($CH_2$)-Si(Me)$_2$-O-Si(Me)$_2$[($CH_2$)$_3$Ph], Li-($CH_2$)-Si (Me) $_2$-O-Si(Me)(Pr)$_2$, Li-($CH_2$)-Si(Me)$_2$-O-Si(Me)(Bu)$_2$, Li- ($CH_2$)-Si (Me)$_2$-O-Si(Me)($C_6H_{11}$)$_2$, Li-($CH_2$)-Si(Me)$_2$-O-Si(Et)$_2$(Pr), Li-($CH_2$)-Si(Me)$_2$-O-Si(Et)$_2$(Bu), Li-($CH_2$)-Si(Me)$_2$-O-Si(Et)$_2$(Ph), Li-($CH_2$)-Si(Me)$_2$-O-Si(Pr)$_2$($C_{18}H_{37}$), Li-($CH_2$)-Si(Me) $_2$-O-Si(Bu)$_2$($C_{18}H_{37}$), Li-($CH_2$)-Si(Me)$_2$-O-Si(Me)(Ph)$_2$, and Li-($CH_2$)-Si(Me)$_2$-O-Si(Bu)(Ph)$_2$.

Preferably, the total amount of the compound according to Formula 1 is typically 0.1 to 10 mmol, preferably 0.2 to 5 mmol per 100 grams of monomers (total polymerizable monomers).

In another embodiment of the present invention, the process described herein comprises the additional step (iii) of adding a chain-end modifying agent. Preferably, the chain-end modifying agent comprises a compound according to any of Formulae (3)-(11):

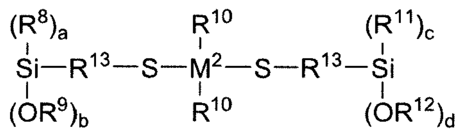

Formula 3

wherein in formula 3:

M2 is a silicon atom or a tin atom;

R13 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12

alkyl)silyl)amino, tris(C1-C7 hydrocarbyl)silyl, (C7-C18) alkylaryl and (C6-C18) aryl;
R9 and R12 are each independently selected from (C1-C4) alkyl;
R8, R10, and R11 are each independently selected from (C1-C18) alkyl, (C6-C18) aryl and (C7-C18) alkylaryl;
a and c are each independently selected from 0, 1 and 2; b and d are each independently selected from 1, 2 and 3; with the proviso that a+b=3, and c+d=3;

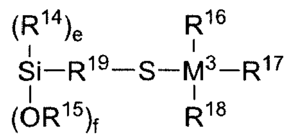

Formula 4

wherein in formula 4:
M3 is a silicon atom or a tin atom;
R19 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;
R15 is independently selected from (C1-C4) alkyl, (C6-C18) aryl and (C7-C18) alkylaryl;
R16, R17 and R18 are each independently selected from (C1-C18) alkyl, (C1-C18) alkoxy, (C6-C18) aryl and (C7-C18) alkylaryl;
R19 is independently selected from (C1-C18) alkyl, (C1-C18) alkoxy, (C6-C18) aryl, (C7-C18) alkylaryl and R18-(C2H4O)g-O-, wherein R18 is selected from (C5-C23) alkyl, (C5-C23) alkoxy, (C6-C18) aryl and (C7-C25) alkylaryl and g is selected from 4, 5 and 6;
e is selected from 0, 1 and 2; f is selected from 1, 2 and 3; with the proviso that e+f=3;

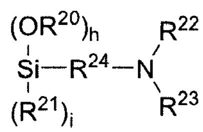

Formula 5

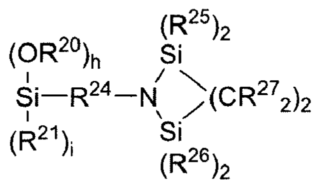

Formula 6

wherein in Formula 5 and Formula 6:
R24 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;
R20 is independently selected from (C1-C4) alkyl, (C6-C18) aryl and (C7-C18) alkylaryl;
R25, R26 and R27 are each independently selected from (C1-C18) alkyl, (C1-C18) alkoxy, (C6-C18) aryl and (C7-C18) alkylaryl;
R21 is independently selected from (C1-C18) alkyl, (C1-C18) alkoxy, (C6-C18) aryl, (C7-C18) alkylaryl and R43-(C2H4O)j-O-, wherein R43 is selected from (C5-C23) alkyl, (C5-C23) alkoxy, (C6-C18) aryl and (C7-C25) alkylaryl; and j is selected from the 4, 5 and 6;
R22 and R23 are independently selected from (C1-C16) alkyl and -SiR28R29R30, wherein R28, R29 and R30 are independently selected from (C1-C16) alkyl, (C6-C18) aryl and (C7-C18) alkylaryl;
i is selected from 0, 1 and 2; h is selected from 1, 2 and 3; and with the proviso that i+h=3;

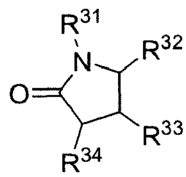

Formula 7

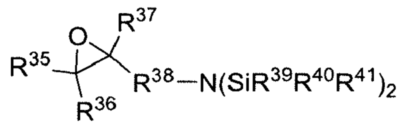

Formula 8

wherein in Formula 7 and Formula 8:

R31, R32, R33, R34, R35, R36, R37, R39, R40 and R41 are each independently selected from hydrogen, (C1-C16) alkyl, (C6-C16) aryl and (C7-C16) alkylaryl; and

R38 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;

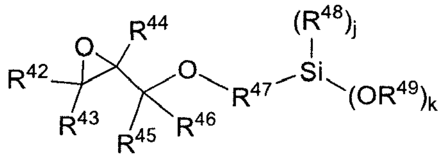

Formula 9

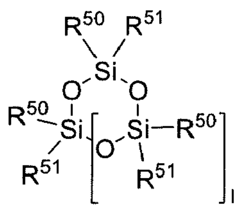

Formula 10

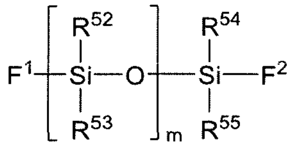

Formula 11

wherein in Formula 9, in Formula 10 and in

Formula 11: R42, R43, R44, R45, R46, R48, R50, R51, R52, R53, R54 and R55 are each independently selected from hydrogen, (C1-C16) alkyl, (C6-C16) aryl and (C7-C16) alkylaryl;

R49 is selected from (C1-C4) alkyl, (C6-C18) aryl and (C7-C18) alkylaryl;

R47 is at least divalent and is selected from (C6-C18) aryl, (C7-C18) alkylaryl and (C1-C18) alkyl, wherein each

group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;
j is selected from 0, 1 and 2; k is selected from 1, 2 and 3; with the proviso that k+l=3; and 1 is selected from 1 to 20;
F1 and F2 are independently selected from hydrogen, hydroxy, chlorine, bromine, iodine, -SiR52R53R54, wherein R52, R53, R54 are the same or different and are as defined above, vinyl, (C6-C16) aryl, (C7-C16) alkylaryl and (C1-C16) alkyl, wherein each hydrocarbyl group is optionally substituted with one or more groups selected from hydroxyl, di(C1-C7 hydrocarbyl)amino, bis(tri(C1-C12 alkyl)silyl)amino and an epoxy group.

The chain-end modifying agent is preferably added at almost complete or at complete conversion of the at least one conjugated diene monomer and, if applicable, the one or more aromatic vinyl monomer(s), preferably at a conversion rate of the polymer of 80 % by weight or more based on the amount of monomers provided. Preferably, the step of adding a chain-end modifying agent is started at a monomer conversion of between 85 and 100 % by weight based on the amount of monomers provided. The phrases "amount of monomers provided", "charged amount of monomers" or similar terms as used herein refer to the amount of monomers provided in the polymerization process. In a preferred embodiment, the conversion rate is between 92.0 and 99.9 % by weight, preferably between 94.0 and 99.9 % by weight based on the amount of monomers provided. The term "monomer conversion" as used herein refers to the monomer conversion (for example the sum conversion of styrene and butadiene) determined e.g. at the outlet of a given polymerization reactor. Preferably, a substantial amount of the living polymer chain-ends is not terminated prior to the reaction with the chain-end modifying agent described herein, i.e. the living chain ends are present and capable of reacting with the modifier in a polymer chain-end modification reaction. In the course of the modification reaction, one or more than one polymer chain can react with the chain-end modifier. As a result, one or more than one polymer chain is linked to the functionality derived from the chain-end modifier. The chain-end modifying agent can be added to the polymer solution without dilution; however, it may be beneficial to add the modifier in solution using an inert solvent, e.g. the solvent described hereinabove.

At the outlet of the polymerization reactor or at the outlet of a series of two or more polymerization reactors, a elastomeric polymer or a solution thereof is obtained which is preferably mixed with a stabilizer such as an antioxidant.

If more than one chain-end modifying agent is used for the purpose of chain-end modification, the chain-end modifying agents can be added one after another to the living polymer or they can be mixed together before adding such a mixture of chain-end modifying agents to the living polymer. The chain-end modifying agents may be added intermittently (or at regular or irregular intervals) or continuously during polymerization, but they are preferably added at the conversion rates discussed hereinabove. In one embodiment, the chain-end modification reaction occurs before, after or during the addition of any coupling agent. Preferably, the chain-end modification reaction is completed after the addition of any coupling agent.

In a preferred embodiment, more than 20 %, preferably more than 35 % and even more preferably more than 50 % of the polymer chains, formed in the course of the polymerization process, are linked with a chain-end modifying agent in the process of polymer chain-end modification. In one embodiment, more than 50 %, preferably more than 60 %, and more preferably more than 75 % of the living polymer of the invention (still remaining after the coupling reaction) react with a chain-end modifying agent.

In a particularly preferred embodiment, the chain-end modifying agent is selected from one or more compounds represented by Formulae 3 and 4.

RANDOMIZER AGENTS

Polar coordinator compounds, also referred to as randomizer agents, may optionally be added to the polymerization to adjust the microstructure of the conjugated diene portion (including the content of vinyl bonds of the polybutadiene fraction), or to adjust the composition distribution of the aromatic vinyl compound, thus serving as a randomizer component. Two or more randomizer agents may be used in combination. Exemplary randomizer agents are Lewis bases and include, but are not limited to, ether compounds, such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, alkyltetrahydrofurylethers, such as methyltetrahydrofurylether, ethyltetrahydrofurylether, propyltetrahydrofurylether, butyltetrahydrofurylether, hexyltetrahydrofurylether, octyltetrahydrofurylether, tetrahydrofuran, 2,2-(bistetrahydrofurfuryl)propane, bistetrahydrofurfurylformal, methyl ether of tetrahydrofurfuryl alcohol, ethyl ether of tetrahydrofurfuryl alcohol, butyl ether of tetrahydrofurfuryl alcohol, a-methoxytetrahydrofuran, dimethoxybenzene and dimethoxyethane, and tertiary amine compounds, such as triethylamine, pyridine, N,N,N',N'-tetramethyl ethylenediamine, dipiperidinoethane, methyl ether of N,N-diethylethanolamine, ethyl ether of N,N-diethylethanolamine and N,N-diethylethanolamine. Examples of preferred randomizer compounds are identified in WO 2009/148932, incorporated herein by reference in its entirety. The randomizer agent(s) will typically be added at a molar ratio of randomizer compound to initiator compound of from 0.012:1 to 10:1, preferably from 0.1:1 to 8:1 and more preferably from 0.25:1

to about 6:1.

COUPLING AGENTS

A coupling agent may optionally be added to the polymerization compositions of the invention to form branched polymers.

Coupling agents include tin tetrachloride, tin tetrabromide, tin tetrafluoride, tin tetraiodide, silicon tetrachloride, silicon tetrabromide, silicon tetrafluoride, silicon tetraiodide, alkyl tin and alkyl silicon trihalides or dialkyl tin and dialkyl silicon dihalides. Polymers coupled with tin or silicon tetrahalides have a maximum of four arms, polymers coupled with alkyl tin and alkyl silicon trihalides have a maximum of three arms, and polymers coupled with dialkyl tin and dialkyl silicon dihalides have a maximum of two arms. Hexahalo disilanes or hexahalo disiloxanes can also be used as coupling agents, resulting in polymers with a maximum of six arms. Useful tin and silicon halides coupling agents include: SnCl4, (R1)3SnCl, (R1)2SnCl2, R1SnCl3, SiCl4, R1SiC13, (R1)2SiCl2, (R1)3SiCl, Cl3Si-SiCl3, Cl3Si-0-SiCl3, Cl3Sn-SnCl3 and Cl3Sn-O-SnCl3 wherein R1 is a hydrocarbyl group, preferably an alkyl group. Examples of tin and silicon alkoxides coupling agents further include: Sn(OMe)4, Si(OMe)4, Sn(OEt)4 and Si(OEt)4. The most preferred coupling agents are: SnCl4, SiCl4, Sn(OMe)4 and Si(OMe)4.

The coupling agents may be added intermittently (or at regular or irregular intervals) or continuously during the polymerization step, but are preferably added at a conversion rate of the polymerization of more than 80 percent and more preferably at a conversion rate of more than 90 percent. The coupling agent will typically be added only after a high degree of conversion has already been achieved.

For example, a coupling agent can be continuously added during the polymerization, in cases where asymmetrical coupling is desired. Such continuous addition is normally carried out in a reaction zone separate from the zone where the bulk of the polymerization is taking place. The coupling agent can be added in a hydrocarbon solution, for example, in cyclohexane, to the polymerization admixture, with suitable mixing for distribution and reaction. Typically, from 0.01 to 2.0 mol, preferably from 0.02 to 1.5 mol and more preferably from 0.04 to 0.6 mol of the coupling agent is used for every 4.0 moles of living anionic polymer chain ends.

Preferably, a substantial amount of the polymer chain ends is not terminated prior to the reaction with the coupling agent; that is, living polymer chain ends are present and capable of reacting with the coupling agent in a polymer chain coupling reaction. The coupling reaction occurs before, after or during the addition of any chain end-modifying agent. The coupling reaction is preferably completed prior to the addition of the chain end-modifying agent. In some embodiments, between 5 and 20 percent of the living polymer chain ends, as determined by GPC, have reacted with coupling agent prior to the addition of the chain end-modifying agent. In other embodiments, between 20 and 35 percent of the living polymer chain ends have reacted with coupling agent prior to the addition of the chain end-modifying agent. In yet another embodiment, between 35 and 50 percent of the living polymer chain ends have reacted with coupling agent prior to the addition of the chain end-modifying agent.

A combination of different coupling agents such as Bu2SnCl2 and SnCl4; Me2SiCl2 and Si(OMe)4; Me2SiCl2 and SiCl4; SnCl4 and Si(OMe)4; SnCl4 and SiCl4, can also be used to couple polymer chains. It is particularly desirable to use a combination of tin and silicon coupling agents in tire tread compounds that contain both silica and carbon black. In such case, the molar ratio of the tin to the silicon compound will normally be within the range of from 20:80 to 95:5; more typically from 40:60 to 90:10 and preferably from 60:40 to 85:15. Most typically, an amount of from about 0.001 to 4.5 mmol of coupling agent is employed per 100 grams of polymer. It is normally preferred to utilize from about 0.05 to about 0.5 mmol of coupling agent per 100 grams of polymer to obtain the desired Mooney viscosity and to enable subsequent chain end functionalization of the remaining living polymer fraction. Larger quantities tend to produce polymers containing terminally reactive groups or insufficient coupling and only enable an insufficient chain end modification.

The polymer coupling reaction may be carried out in a temperature range of from 0°C to 150°C, preferably from 15°C to 120°C and even more preferably from 40°C to 100°C. There is no limitation for the duration of the coupling reaction. However, with respect to an economical polymerization process, for example in the case of a batch polymerization process, the coupling reaction is usually stopped at about 5 to 60 minutes after the addition of the coupling agent.

In a preferred embodiment of the invention divinylbenzene is used as a coupling agent. The divinylbenzene will typically be added together with the monomers before the start of the polymerization by addition of the initiator.

INITIATOR

It has been found that the use of the polymerization initiator according to Formula 1 in the process according to the present invention allows the preparation of polymers and compositions that have beneficial properties, especially when used for the manufacture of articles such as tires. These advantages are visible in terms of improved abrasion resistance and tensile strength, while other properties such as wet grip and rolling resistance are still sufficient.

In a further aspect, the present invention thus relates to a polymer obtainable according to the process described

herein as well as to a composition comprising the polymer. The composition according to the present invention may comprise oil and/or filler and/or a vulcanizing agent and/or other components.

The present invention yet also relates to the polymerization initiator according to formula 1 described herein. The polymerization initiator according to formula 1 can be prepared by reacting a compound according to formula 2 with an alkali metal selected from lithium, sodium and potassium:

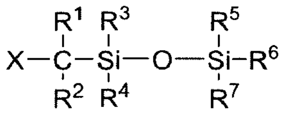

Formula 2

wherein X in Formula 2 is chlorine, bromine or a iodine atom; and R1, R2, R3, R4, R5, R6 and R7 in Formula 2 are as defined for Formula 1.

A method of making the polymerization initiator of Formula 1 thus comprises the step of reacting a compound of Formula 2 with an alkali metal. The reaction is usually carried out at a ratio of compound of Formula 1 to the alkali metal in terms of mole equivalents of from 2 to 20, preferably from 2 to 15 and even more preferably from 2 to 10. It is preferably performed in a nonpolar solvent, including hydrocarbon solvent, including aliphatic and aromatic solvent, preferably aliphatic solvent, such as hexane, heptane, pentane, isopar, cyclohexane and methylcyclohexane, and is usually carried out for a period of from 2 seconds to 7 days, preferably from 5 seconds to 5 days, even more preferably from 10 seconds to 3 days, at a temperature ranging from -60°C to 130°C, preferably from 0°C to 100°C and even more preferably from 20°C to 80°C.

For increasing the storage stability (shelf life) of the polymerization initiator according to Formula 1, it is possible to contact the resulting reaction mixture containing the polymerization initiator and including alkali metal M1 with a limited amount of one or more polymerizable monomers selected from conjugated diene monomers and aromatic vinyl compounds, preferably selected from styrene, butadiene and isoprene. For this purpose, an amount of up to 1000 equivalents, preferably up to 200 equivalents, most preferably up to 75 equivalents of polymerizable monomer per alkali metal equivalent is suitably used.

Preferred embodiments of the reaction and of the compounds of Formula 2 are those which provide a polymerization initiator of Formula 1 and embodiments thereof as defined herein in the description of the polymerization initiator.

POLYMERIZATION WORK-UP

The polymer resulting from the process of the present invention can be worked up by a method known per se. In general, the active or non-active residue of the polymerization initiator and, optionally, of the chain-end modifying agent is deactivated at some point during the processing of the polymer, preferably after completion of process steps (i), (ii) and, if conducted, (iii), e.g. by means of water, organic acids, anionic acids or an alcohol. The use of water, organic acids, anionic acids or an alcohol renders metal organic residues derived from the polymerization initiator compound or metallated polymer chain-ends less reactive and thus less dangerous. Removal of residues derived from the polymerization initiator and, optionally, the chain-end modifying agent can sometimes be omitted, particularly when the quantity of the components of the initiator and the chain-end modifying agent is very low. If needed, however, the level of residues derived from the polymerization initiator and the chain-end modifying agent can be reduced in the polymer, e.g. by washing. Such a deactivation step can be followed by a stripping step to remove organic solvents from the polymer. Alternatively, the solvent could also be removed under reduced pressure. After drying, the elastomeric polymer can be pressed into any desired shape, preferably into bails. Alternatively, or subsequently, the elastomeric polymer can be mixed or compounded with e.g. fillers. Mixing and compounding the elastomeric polymers with e.g. fillers can, as a further alternative, be already conducted prior to solvent removal.

In another aspect, the present invention, therefore, also relates to an elastomeric polymer obtainable according to the above process.

POLYMER

For most applications, the polymer is preferably a homopolymer derived from a conjugated diolefin, a copolymer derived from a conjugated diolefin monomer with an aromatic vinyl monomer and/or a terpolymer of one or two types of conjugated diolefins with one or two types of aromatic vinyl compounds. Examples of particularly useful polymers include homopolymers of butadiene or isoprene and random or block co- and terpolymers of butadiene, isoprene and

styrene, especially a random copolymer of butadiene with isoprene and a random or block copolymer of butadiene with styrene.

Although there are no specific limitations regarding the amount of aromatic vinyl monomer used in the polymer, for most applications the one or more aromatic vinyl monomer(s) constitute from 1 to 60%, preferably from 2 to 55% and more preferably from 5 to 50% by weight, based on the total weight of the polymer. An amount of less than 2% by weight may lead to a deteriorated balance of rolling resistance, wet skid and abrasion resistance and to reduced tensile strength in a final product, whereas an amount of more than 60% by weight may lead to increased hysteresis loss. The polymer may be a block or random copolymer of an aromatic vinyl monomer, and preferably 40% by weight or more of the aromatic vinyl monomer units are linked singly, and 10 % by weight or less are polymeric "blocks" of eight or more aromatic vinyl monomers linked successively (the length of successively linked aromatic vinyl units can be measured by an ozonolysis-gel permeation chromatography method developed by Tanaka et al. (Polymer, Vol. 22, pp. 1721-1723 (1981)). Copolymers outside this range tend to exhibit increased hysteresis loss.

Although there are no specific limitations regarding the content of 1,2-bonds and/or 3,4-bonds (hereinafter called "vinyl bond content") of the conjugated diolefin portion of the polymer, for most applications the vinyl bond content is preferably from 2 to 90 % by weight, particularly preferably from 4 to 80 % by weight (based on the total weight of the diolefin portion). If the vinyl bond content in the polymer is less than 2 % by weight, the resulting product may have an inferior balance of wet skid resistance, rolling resistance and abrasion resistance. If the vinyl content in the polymer exceeds 90 % by weight, the resulting product may exhibit deteriorated tensile strength and abrasion resistance and a relatively large hysteresis loss.

While dependant upon the specific polymer and desired end use application, polymers of the present invention preferably have a Mooney viscosity (ML 1+4, 100°C, as measured in accordance with ASTM D 1646 (2004) in the range of from 0 to 150, preferably from 0 to 120, and more preferably in the range of from 20 to 120, as determined using a Monsanto MV2000 instrument. If the Mooney viscosity (ML 1+4, 100°C) of the polymer is more than 150 MU, the processability (filler incorporation and heat build up in the internal mixer, banding on the roll mill, extrusion rate, extrudate die swell, smoothness, etc.) is likely to be negatively affected because the compounding machinery used by the tire manufacturers are not designed to handle such high Mooney rubber grades, and the cost of processing increases. In some cases a Mooney viscosity (ML 1+4, 100°C) of less than 20 may not be preferred due to increased tack and cold flow of the uncrosslinked elastomeric polymer, resulting in difficult handling, poor green strength and poor dimensional stability during storage. In some further cases, when the modified polymers are used as a softener, compatibilizer or processing aid in polymer formulations, a Mooney viscosity (ML 1+4, 100°C) of less than 20 may be preferred.

The number average molecular weight of polymers of the present invention is in the range of 5 to 5000 kg/mol, preferably from 10 to 3000 kg/mol, and more preferably in the range of from 15 to 2000 kg/mol.

SOFTENERS (OILS)

In one embodiment of the present invention, a softener such as oil may be used in combination with the elastomeric polymer to reduce viscosity or Mooney viscosity values, or to improve processability and various performance properties of polymer compositions after vulcanization.

The oil(s) can be added to the elastomeric polymer prior to the end of the polymer preparation process or as a separate component after polymerization, for example after steam stripping. Preferably, the oil is added in an amount of from 10 to 50 parts by weight of oil per 100 parts by weight of polymer. Representative examples and classifications of oils are described in WO 2009/148932 and US 2005/0159513, each of which is incorporated herein by reference in its entirety.

Representative oils include MES (Mild Extraction Solvate), RAE (Residual Aromatic Extract, including T-RAE (Treated Residual Aromatic Extract) and S-RAE), DAE (Distillate Aromatic Extract, including TDAE (Treated Distillated Aromatic Extract)) and NAP (light and heavy naphthenic oils, including Nytex 4700, Nytex 8450, Nytex 5450, Nytex 832, Tufflo 2000 and Tufflo 1200). In addition, native oils, including vegetable oils, can be used as extender oils. Representative oils also include functionalized variations of these oils, particularly epoxidized or hydroxylated oils. The oils may contain varying concentrations of polycyclic aromatic compounds, paraffinics, naphthenics and aromatics and may have different glass transition temperatures.

PROCESSING AIDS

Processing aids can optionally be added to the polymer composition. They are usually added for reducing the viscosity. As a result, the mixing period is decreased and/or the number of mixing steps is reduced and, consequently, less energy is consumed and/or a higher throughput in the course of the rubber compound extrusion process is achieved. Representative processing aids are described in Rubber Handbook, SGF, The Swedish Institution of Rubber Technology 2000 and in Werner Kleemann, Kurt Weber, Elastverarbeitung-Kennwerte und Berechnungsmethoden, Deutscher Verlag

fur Grundstoffindustrie (Leipzig, 1990), each of which is incorporated herein by reference in its entirety. Examples of representative processing aids include in particular:

(A) fatty acids, including oleic acid, priolene, pristerene and stearic acid;
(B) fatty acid salts, including Aktiplast GT, PP, ST, T, T-60, 8, F; Deoflow S; Kettlitz Dispergator FL, FL Plus; Dispergum 18, C, E, K, L, N, T, R; Polyplastol 6, 15, 19, 21, 23; Struktol A50P, A60, EF44, EF66, EM16, EM50, WA48, WB16, WB42, WS180, WS280 and ZEHDL;
(C) dispersing agents, including Aflux 12, 16, 42, 54, 25; Deoflow A, D; Deogum 80; Deosol H; Kettlitz Dispergator DS, KB, OX; Kettlitz-Mediaplast 40, 50, Pertac/GR; Kettlitz-Dispergator SI; Struktol FL and WB 212; and
(D) dispersing agents or processing aids for highly active white fillers, including Struktol W33, WB42, HT207, HT254, HT276; Ultra-Flow 440 and 700S (Performance Additives); Sylvatraxx™ 1001 and 1035 (Arizona Chemical).

FILLERS

In one embodiment, the polymer composition of the invention comprises one or more fillers, serving as reinforcement agents. Examples of suitable fillers include carbon black (including electroconductive carbon black), carbon nanotubes (CNT) (including discrete CNT, hollow carbon fibers (HCF) and modified CNT carrying one or more functional groups, such as hydroxyl, carboxyl and carbonyl groups) graphite, graphene (including discrete graphene platelets), silica, carbon-silica dual-phase filler, clays (layered silicates, including exfoliated nanoclay and organoclay), calcium carbonate, magnesium carbonate, lignin, amorphous fillers, such as glass particle-based fillers, starch-based fillers, and combinations thereof. Further examples of suitable fillers are described in WO 2009/148932 which is fully incorporated herein by reference.

Examples of suitable carbon black include the one conventionally manufactured by a furnace method, for example having a nitrogen adsorption specific surface area of 50-200 m2/g and DBP oil absorption of 80-200 ml/100 grams, such as carbon black of the FEF, HAF, ISAF or SAF class, and electroconductive carbon black. In some embodiments, high agglomeration-type carbon black is used. Carbon black is typically used in an amount of from 2 to 100 parts by weight, or 5 to 100 parts by weight, or 10 to 100 parts by weight, or 10 to 95 parts by weight per 100 parts by weight of the total polymer.

Examples of suitable silica fillers include wet process silica, dry process silica and synthetic silicate-type silica. Silica with a small particle diameter and high surface area exhibits a high reinforcing effect. Small diameter, high agglomeration-type silica (i.e. having a large surface area and high oil absorptivity) exhibits excellent dispersibility in the polymer composition, resulting in superior processability. An average particle diameter of silica in terms of the primary particle diameter may be from 5 to 60 nm, or 10 to 35 nm. The specific surface area of the silica particles (measured by the BET method) may be from 35 to 300 m2/g. Silica is typically used in an amount of from 10 to 150 parts by weight, or 30 to 130 parts by weight, or 50 to 130 parts by weight per 100 parts by weight of the total polymer.

Silica fillers can be used in combination with other fillers, including carbon black, carbon nanotubes, carbon-silica dual-phase-filler, graphene, graphite, clay, calcium carbonate, magnesium carbonate and combinations thereof.

Carbon black and silica may be added together, in which case the total amount of carbon black and silica is from 30 to 150 parts by weight or 50 to 150 parts by weight per 100 parts by weight of the total polymer.

Carbon-silica dual-phase filler is so called silica-coated carbon black made by coating silica on the surface of carbon black and commercially available under the trademark CRX2000, CRX2002 or CRX2006 (products of Cabot Co.). Carbon-silica dual-phase filler is added in the same amounts as described above with respect to silica.

SILANE COUPLING AGENTS

In some embodiments, a silane coupling agent (used for compatibilization of polymer and fillers) can be added to a polymer composition of the invention when additionally containing one or more of silica, layered silicate (such as magadiite) and carbon-silica dual-phase filler. The typical amount of a silane coupling agent added is from about 1 to about 20 parts by weight and, in some embodiments, from about 5 to about 15 parts by weight for 100 parts by weight of the total amount of silica and/or carbon-silica dual-phase filler.

Silane coupling agents can be classified according to Fritz Röthemeyer, Franz Sommer: Kautschuk Technologie, (Carl Hanser Verlag 2006):

(A) bifunctionalized silanes, including Si230 ($(EtO)_3Si(CH_2)_3Cl$), Si225 ($(EtO)_3SiCH=CH_2$), Si263 ($(EtO)_3Si(CH_2)_3SH$), $[(EtO)_3Si(CH_2)_3S_x(CH_2)_3Si(OEt)_3]$ with x = 3.75 (Si69), 2.35 (Si75) or 2.15 (Si266), Si264 ($(EtO)_3Si\text{-}(CH_2)_3SCN$) and Si363 (Evonic Industries AG); NXT (3-octanoylthio-1-propyltriethoxysilane), NXT-Z45, NXT-Z100 (Momentive Performance Materials Inc.); Xiameter® ofs-6030 silane (methacryloxypropyltrimethoxysilane), Xiameter® ofs-6300 silane ($(MeO)_3SiCH=CH_2$), and

(B) monofunctional silanes, including Si203 ($(EtO)_3$-Si-$C_3H_7$) and Si208 ($(EtO)_3$-Si-$C_8H_{17}$).

Further suitable examples of silane coupling agents are given in WO 2009/148932 and include bis-(3-hydroxy-dimethylsilyl-propyl)tetrasulfide, bis-(3-hydroxy-dimethylsilyl-propyl) disulfide, bis-(2-hydroxy-dimethylsilyl-ethyl) tetrasulfide, bis-(2-hydroxy-dimethylsilyl-ethyl)disulfide, 3-hydroxy-dimethylsilyl-propyl-N,N-dimethylthiocarbamoyl tetrasulfide and 3-hydroxy-dimethylsilyl-propylbenzothiazole tetrasulfide.

CROSSLINKING AGENTS (VULCANIZING AGENTS)

Any crosslinking agent conventionally used in the manufacture of rubber products can be used in the invention, i.e. in the process of the present invention, preferably in process step (iv), for the preparation of compositions described herein, for the preparation of a cross-linked elastomeric polymer, a composition comprising said cross-linked elastomeric polymer as well as articles comprising the composition. Moreover, a combination of two or more crosslinking agents may be used.

Sulfur, sulfur-containing compounds acting as sulfur donors, sulfur accelerator systems and peroxides are the most common crosslinking agents. Examples of sulfur-containing compounds acting as sulfur donors include dithiodimorpholine (DTDM), tetramethylthiuram disulfide (TMTD), tetraethylthiuram disulfide (TETD) and dipentamethylenethiuram tetrasulfide (DPTT). Examples of sulfur accelerators include amine derivatives, guanidine derivatives, aldehydeamine condensation products, thiazoles, thiuram sulfides, dithiocarbamates and thiophosphates. Examples of peroxides include di-tert.-butyl-peroxides, di-(tert.-butyl-peroxy-trimethyl-cyclohexane), di-(tert.-butyl-peroxy-isopropyl-)benzene, dichloro-benzoylperoxide, dicumylperoxides, tert.-butyl-cumyl-peroxide, dimethyl-di(tert.-butyl-peroxy)hexane, dimethyl-di(tert.-butyl-peroxy)hexine and butyl-di(tert.-butyl-peroxy)valerate (Rubber Handbook, SGF, The Swedish Institution of Rubber Technology 2000).

Further examples and additional information regarding crosslinking agents can be found in Kirk-Othmer, Encyclopedia of Chemical technology 3rd, Ed., (Wiley Interscience, N.Y. 1982), volume 20, pp. 365-468, (specifically "Vulcanizing Agents and Auxiliary Materials" pp. 390-402).

A crosslinking accelerator of the sulfene amide-type, guanidine-type or thiuram-type can be used together with a crosslinking agent as required. Other additives such as zinc oxide, crosslinking auxiliaries, aging preventives, processing adjuvants and the like may optionally be added. A crosslinking agent is typically added to the polymer composition in an amount of from 0.5 to 10 parts by weight or, in some embodiments, 1 to 6 parts by weight per 100 parts by weight of the total polymer. Examples of crosslinking accelerators and amount thereof added with respect to the total polymer are given in WO 2009/148932.

Sulfur accelerator systems may or may not contain zinc oxide. Zinc oxide is preferably used as a component of the sulfur accelerator system.

CROSSLINKED (VULCANIZED) POLYMER COMPOSITION

The crosslinked (vulcanized) polymer composition according to an aspect of the invention is obtained by crosslinking (vulcanizing) a polymer composition of the invention, which comprises at least one crosslinking (vulcanizing) agent. Since the crosslinked elastomeric polymer compositions of the invention exhibit improved wear properties, they are well suited for use in manufacturing of tires, tire treads, tire side walls, as well as other industrial products such as belts, conveyor belts, seals, hoses, vibration dampers and footwear components.

The crosslinked polymer composition is the result of a reactive polymer-polymer crosslink-forming process which is performed on (a) a mixture of the polymer and at least one vulcanizing agent or (b) the polymer composition comprising at least one vulcanizing agent. Therefore, the reactive process converts an essentially uncrosslinked polymer or an essentially uncrosslinked polymer composition, particularly a polymer or polymer composition each containing at least one vulcanizing agent, into a vulcanized (or crosslinked) polymer composition.

The crosslinked polymer composition of the invention exhibits increased abrasion resistance and increased tensile strength properties, while a composition comprising the uncrosslinked polymer (prior to vulcanization) maintains good processing characteristics. The composition is useful in preparing tire treads having increased abrasion resistance, handling, chipping and chunking, while maintaining good rolling resistance, wet grip, ice grip and heat build-up.

The invention also provides an article comprising at least one component formed from a crosslinked polymer composition of the invention. The article may be a tire, a tire tread, a tire side wall, an automotive part, a footwear component, a golf ball, a belt, a gasket, a seal or a hose.

For producing vehicle tires, the following additional polymers are of particular interest for use in combination with the polymer of the invention: natural rubber; low cis polybutadiene (LCBR) comprising less than 20 percent by weight of 1,2-polybutadiene, emulsion SBR (ESBR) and solution SBR (SSBR) rubbers with a glass transition temperature above -50 °C; polybutadiene rubber with a high cis-1,4-unit content (>90%), such as obtained by using catalysts based

on nickel, cobalt, titanium, vanadium, gadolinium or neodymium; and polybutadiene rubber with a vinyl content of 0 to 75%; and combinations thereof; polybutadiene rubber with a high trans-1,4-unit content (>75%) or SBR containing, for example, between 5 and 45 wt% styrene and having a high trans-1,4-polybutadiene content (>75%) in the polybutadiene fraction of the copolymer (each type of polymer, SBR or BR, may be obtained with one or more initiator compounds comprising earth alkaline metal compounds, such as described in U.S. Patent Nos. 6,693,160; 6,627,715; 6,489,415; 6,103,842; 5,753,579; 5,086,136; and 3,629,213, each of which is hereby incorporated herein by reference in its entirety; or by using catalysts based on cobalt, such as described in U.S. Patent Nos. 6310152; 5,834,573; 5,753,761; 5,448,002 and 5,089,574 and U.S. Patent Application Publication No. 2003/0065114, each of which is hereby incorporated herein by reference in its entirety; or by using catalysts based on vanadium, such as described in EP 1 367 069; JP 11301794 and U.S. 3,951,936, each of which is hereby incorporated herein by reference in its entirety; or by using catalysts based on neodymium, such as described in EP 0 964 008, EP 0 924 214 and U.S. Patent Nos. 6,184,168; 6,018,007; 4931376; 5,134,199 and 4,689,368, each of which is hereby incorporated herein by reference in its entirety).

The composition of the invention may also be used for producing high impact polystyrene (HIPS) and butadiene-modified acrylonitrile-butadiene-styrene copolymer (ABS) (see, for example, WO 2009/148932, incorporated herein by reference).

DEFINITIONS

Unless specifically indicated otherwise, the expression "polymer" as used herein is intended to encompass both unmodified polymer and modified (i.e. chain end-modified) polymer.

Alkyl groups as defined herein, whether as such or in association with other groups, such as alkylaryl or alkoxy, include both straight chain alkyl groups, such as methyl (Me), ethyl (Et), n-propyl (Pr), n-butyl (Bu), n-pentyl, n-hexyl, etc., branched alkyl groups, such as isopropyl, tert-butyl, etc. and cyclic alkyl groups, such as cyclohexyl. Alkoxy groups as defined herein include methoxy (MeO), ethoxy (EtO), propoxy (PrO), butoxy (BuO), isopropoxy, isobutoxy, pentoxy, etc.

Aryl groups as defined herein include phenyl (Ph), biphenyl and other benzenoid compounds. Aryl groups preferably contain only one aromatic ring and most preferably contain a C6 aromatic ring.

Alkylaryl groups as defined herein refer to a combination of one or more aryl groups bound to one or more alkyl groups, for example in the form of alkyl-aryl, aryl-alkyl, alkyl-aryl-alkyl and aryl-alkyl-aryl. Alkylaryl groups preferably contain only one aromatic ring and most preferably contain a C6 aromatic ring.

Examples

The following examples are provided in order to further illustrate the invention, and are not to be construed as a limitation of the invention. The examples include the preparation and testing of modified elastomeric polymers; and the preparation and testing of uncrosslinked polymer compositions, as well as of cross-linked or cured polymer compositions, also referred to as vulcanized polymer composition. Unless stated otherwise, all parts and percentages are expressed on weight basis. "Room temperature" refers to a temperature of 20°C. All polymerizations were performed in a nitrogen atmosphere under exclusion of moisture and oxygen.

The vinyl group content in the polybutadiene fraction was determined by FT-IR measurements on a Nicolet AVATAR 360 FT-IR or a Nicolet iS 10 FT-IR, based on a calibration determination with a $^1$H-NMR method as described above. The IR samples were prepared using a press.

Bonded styrene content: A calibration curve was prepared by FT-IT (Nicolet AVATAR 360 FT-IR or Nicolet iS 10 FT-IR). The IR samples were prepared using press. For the IR determination of bonded styrene in styrene-butadiene copolymers, four bands are checked: a) band for trans-1,4-polybutadiene units at 966 $cm^{-1}$, b) band for cis-1,4-polybutadiene units at 730 $cm^{-1}$, c) band for 1,2-polybutadiene units at 910 $cm^{-1}$ and d) band for bonded styrene (styrene aromatic bond) at 700 $cm^{-1}$. The band heights are normalized according to the appropriate extinction coefficients and summarized to a total of 100%. The normalization is done via $^1$H- and $^{13}$C-NMR (Avance 400 of Bruker Analytik GmbH, $^1$H = 400 MHz; $^{13}$C = 100 MHz).

The 1D NMR spectra were collected on a BRUKER Avance 400 NMR spectrometer (BRUKER Corp.), using a "5 mm Dual detection probe." The field homogeneity was optimized by maximizing the deuterium lock signal. The samples were shimmed by optimizing the deuterium lock signal. The samples were run at room temperature (298 K). The following deuterated solvents were used: $C_6D_6$ (7.16 ppm for $^1$H; 128.06 ppm for $^{13}$C-NMR), $CDCl_3$ (7.26 ppm for $^1$H; 77.16 ppm for $^{13}$C-NMR), thf-$d_8$ (3.58 and 1.73 ppm for 1H; 67.7 and 25.5 ppm for 13C-NMR), the signals of the remaining protons of deuterated solvents were each used as an internal reference.

For spectral processing, the BRUKER TopSpin software was used. Phasing, base line correction and spectral integration of the resulting spectra was done in the manual mode. For acquisition parameters see Table 1.

**Table 1: 1D-NMR acquisition parameters using BRUKER standard pulse sequences**

| | $^{1}H$-NMR | $^{13}C$-NMR |
|---|---|---|
| Observe frequency | 400.130 MHz | 100.613 MHz |
| Spectral width | 8278.146 Hz | 23980.814 Hz |
| BRUKER Pulse program | Zg30 | Zgpg30 |
| Pulse angle | 30° | 30° |
| Relaxation delay | 1.0 s | 2.0 s |
| Number of Data points for FT | 32 K | 32 K |
| Line broadening | 0.3 Hz | 1 Hz |
| Number of accumulated scans | 64 | > 1000 |

GPC-Method: SEC calibrated with narrow distributed polystyrene standard.
Sample preparation:

a) About 9-11 mg dried polymer sample (moisture content < 0.6%) was dissolved in 10 mL tetrahydrofuran, using a brown vial of 10 mL size. The polymer was dissolved by shaking the vial for 20 min at 200 u/min.
b) Polymer solution was transferred into a 2 ml vial using a 0.45 μm disposable filter.
c) The 2 ml vial was placed on a sampler for GPC-analysis.

Elution rate: 1.00 mL/min
Injection volume: 100.00 μL
Polydispersity (Mw/Mn) was used as a measure for the width of molecular weight distribution. The values of Mw and Mn (weight average molecular weight (Mw) and number average molecular weight (Mn)) were measured by gel permeation chromatography on a SEC with refractive index detection (universal calibration). The measurement was performed in THF at 40°C. Instrument: Agilent Serie 1100 /1200; Module setup: degasser, Iso pump, autosampler, thermostat, UV - Detector, RI - Detector.

In each GPC-device, 4 columns were used in a connected mode: 1x Agilent Plgel 10 μm Guard 50 x 7.5 mm (Part No. PL1110-1120) plus 3 x Agilent PLgel 10 μm Mixed-B 300 x 7.5 mm ( Part No. PL1110-6100).

GPC Standards: EasiCal PS-1 Polystyrene Standards, Spatula A + B (Agilent Technologies, Part No. PL2010-0505).

Mp1, Mp2 and Mp3 correspond to the (maximum peak) molecular weight measured at the third, second and first peak of the GPC curve, respectively (the peak Mp1 (lowest molecular weight) is located on the right-hand side of the curve, and the peak Mp3 (highest molecular weight) is located on the left-hand side of the curve). Maximum peak molecular weight means the molecular weight of the peak at the position of maximum peak intensity. Mp2 and Mp3 are two or more polymer chains coupled to one macromolecule. Mp1 is one polymer chain (base molecular weight - no coupling of two or more polymer chains to one macromolecule).

The total coupling rate represents the sum of the weight fractions of coupled polymers relative to the total polymer weight, including the sum of the weight fractions of all coupled polymers and the uncoupled polymer. The total coupling rate is calculated as follows:

CR(total) = (∑Area fraction of all coupled peaks [Peak with maximum Mp2 to peak with highest indexed peak maximum])/(∑Area fraction of all peaks [Peak with peak maximum Mp1 to peak with highest indexed peak maximum]).

The polymer compositions were prepared by combining the component listed below in Table 5 or Table 8 in a 380 ml Banbury mixer (Labstation 350S from Brabender GmbH & Co KG), following a two-stage mixing process. Stage 1 - mixed all components together, except the components of the vulcanization package, to form a stage 1 formulation. Stage 2 - components of vulcanization package were mixed into stage 1 formulation to form a stage 2 formulation.

Mooney viscosity was measured according to ASTM D 1646 (2004), with a preheating time of one minute and a rotor operation time of 4 minutes, at a temperature of 100°C [ML1+4(100 °C)], on a MV 2000E from Alpha Technologies UK. The rubber Mooney viscosity measurement is performed on dry (solvent free) raw polymer (uncrosslinked rubber). The Mooney values of the raw polymers are listed in Table 4.

Measurement of uncrosslinked rheological properties was performed according to ASTM D 5289-95 (reapproved 2001), using a rotor-less shear rheometer (MDR 2000 E from Alpha Technologies UK) to measure Time to Cure (TC). The rheometer measurement was performed at a constant temperature of 160°C on a non-crosslinked second stage polymer formulation, according to Table 5 or Table 8. The amount of polymer sample is about 4.5 g. Sample shape and shape preparation are standardized and defined by the measurement device (MDR 2000 E from Alpha Technologies UK). The TC 50, TC 90 and TC 95 values are the respective times required to achieve 50%, 90% and 95% conversion of the crosslinking reaction. The torque is measured as a function of time of reaction. The crosslinking conversion is automatically calculated from the generated torque versus time curve. The TS 1 and TS 2 values are the respective times required to increase the torque by 1 dNm and 2 dNm above the respective torque minimum (ML) during crosslinking. Tensile Strength and Elongation at Break were measured according to ASTM D 412-98A (reapproved 2002), using a dumbbell die C test piece on a Zwick Z010. Standardized dumbbell die C test pieces of 2 mm thickness were used. The tensile strength measurement was performed at room temperature on a cured second stage polymer sample, prepared according to Table 5 or Table 8. Stage 2 formulations were crosslinked at 160°C to TC 95 (95% crosslinking conversion) (see cure data in Table 6 or Table 9).

Heat build-up was measured according to ASTM D 623, method A, on a Doli 'Goodrich'-Flexometer. The heat build-up measurement was performed on crosslinked second stage polymer samples according to Table 5 or Table 8. Stage 2 formulations were crosslinked at 160°C to TC 95 (95% crosslinking conversion) (see cure data in Table 6 or Table 9).
Rebound resilience was measured according to DIN 53512 at 0°C and 60°C on a Zwick 5109. The measurement was performed on a cured second stage polymer sample, prepared according to Table 5 or Table 8. Stage 2 formulations were crosslinked at 160°C to TC 95 (95% crosslinking conversion) plus 5 minutes extra time (see cure data in Table 6 or Table 9). The smaller the index at 0°C, the better the wet skid resistance (lower = better). The larger the index at 60°C, the lower the hysteresis loss and the lower the rolling resistance (higher = better).

DIN abrasion was measured according to DIN 53516 (1987-06-01). The abrasion measurement was performed on a crosslinked, second stage polymer formulation according to Table 5 or Table 8.

Tan $\delta$ at 60°C and tan $\delta$ at 0°C measurements were performed on rectangular specimen, with a thickness of 2 mm and a width of 10 mm, using a dynamic mechanical thermal spectrometer "Eplexor 150N," manufactured by Gabo Qualimeter Testanlagen GmbH (Germany), by applying a dynamic strain of 2%, at a frequency of 2 Hz, at the respective temperatures. The start length of the specimen, which is equal to the clamp distance of the equipment, is 25 mm. The smaller the index at a temperature of 60°C, the lower the rolling resistance (lower = better). Tan $\delta$ at 0°C was measured using the same equipment and load conditions at 0°C. The larger the index at 0°C, the better the wet skid resistance (higher = better). Tan $\delta$ at 60°C and tan $\delta$ at 0°C were determined (see Table 7). Stage 2 formulations were crosslinked at 160°C to TC 95 (95% crosslinking conversion) (see cure data in Table 6). The process leads to the formation of visually "bubble free," homogeneous cured rubber plates with a thickness of 2 mm. A specimen was cut out by using a specimen cut iron with respective width of 10 mm.

Tan $\delta$ at 60°C was alternatively measured in a Rubber Process Analyzer (RPA) 2000, manufactured by Alpha Technology. Therefore 5.5g of uncrosslinked compounds were prepared according to Table 5 or Table 8. Stage 2 formulations were crosslinked at 160°C to TC 95 (95% crosslinking conversion) in the RPA. After cooling down to 30°C a temperature sweep with an amplitude of 5% strain at a frequency of 2 Hz was performed. The smaller the index at a temperature of 60°C, the lower the rolling resistance (lower = better).

In general, the higher the values for Elongation at Break, Tensile Strength, tan $\delta$ at 0°C, Rebound Resilience at 60°C the better the sample performance; whereas the lower the values for tan $\delta$ at 60°C, Heat Build Up, DIN abrasion and Rebound Resilience at 0°C, the better the sample performance.

**Chain End-Modifying Agents**

Chain End-Modifying Agent **E1** is represented by Formula **E1** below, and was synthesized according to the procedure described in WO 2009/148932.

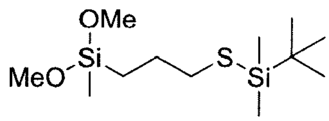

Formula **E1**

Chain End-Modifying Agent **E2** was purchased as 1-methyl-2-pyrrolidon from Merck Millipore.

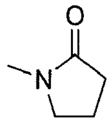

Formula **E2**

**Synthesis of compound C1**

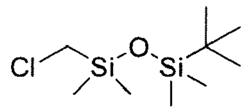

A 250 mL round bottom flask was charged with 80 mL cyclohexane, 0.10 mol tert-butyldimethylsilanol and 0.11 mol triethylamine. (Chloromethyl)dimethylchlorosilane (0.10 mol) was added dropwise under vigorous stirring at room temperature. The reaction mixture was stirred overnight at room temperature. The mixture was filtered to remove the precipitated ammonium salt and washed twice with cyclohexane (20 mL). All volatiles were removed under reduced pressure (10 mbar) to yield 21. 6 g (90 %) of the crude product as a colorless oil. Purity >99 % (GC).
$^{1}$H-NMR (400 MHz, 23°C, thf-$d_8$): = 2.77 (s, 2H, ClC$H_2$), 0.89 (s, 9H, SiC(C$H_3$)$_3$), 0.19 (s, 6H, Si(C$H_3$)$_2$), 0.07 (s, 6H, Si(C$H_3$)$_2$) ppm; $^{13}$C-NMR (101 MHz, 23°C, thf-$d_8$) = 31.53 (ClCH$_2$), 26.34 (SiC(CH$_3$)$_3$), 18.98 (SiC(CH$_3$)$_3$), -0.92 (Si(CH$_3$)$_2$), -2.56 (Si(CH$_3$)$_2$) ppm.

**Synthesis of compound C2**

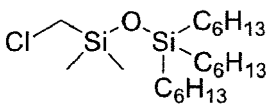

A 50 mL round bottom flask was charged with 20 mL cyclohexane, 16.7 mmol trihexylsilanol and 18.4 mmol triethylamine. (Chloromethyl)dimethylchlorosilane (16.7 mmol) was added dropwise under vigorous stirring at room temperature. The reaction mixture was stirred overnight at room temperature. The mixture was filtered to remove the precipitated ammonium salt and washed twice with cyclohexane (5 mL). All volatiles were removed under reduced pressure (10 mbar) to yield 4.4 g (65 %) of the crude product as a colorless oil. Purity >98 % (GC).
$^{1}$H-NMR (400 MHz, 23°C, $C_6D_6$): = 2.56 (s, 2H, ClC$H_2$), 1.40-1.27 (m, 24H, (C$H_2$)$_4$CH$_3$), 0.90 (t, 9H, (CH$_2$)$_4$C$H_3$), 0.58 (m, 6H, SiC$H_2$), 0.16 (s, 6H, Si(C$H_3$)$_2$) ppm; $^{13}$C-NMR (101 MHz, 23°C, $C_6D_6$) = 33.80 (ClCH$_2$), 32.07 (hexyl-C), 30.92 (hexyl-C), 23.68 (hexyl-C), 23.13 (hexyl-C), 15.91 (hexyl-C), 14.44 (hexyl-C), -1.04 (Si(CH$_3$)$_2$) ppm.

**Synthesis of dimethyl(octadecyl)silanol**

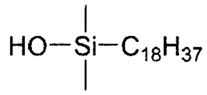

In a beaker potassium hydroxide (70.0 mmol) was dissolved in 30 mL water and cooled with an ice bath. Chlorodimethyl(octadecyl)silane (72.0 mmol) was dissolved in 100 mL diethyl ether and added dropwise to the potassium hydroxide solution. After the addition the mixture was treated with potassium hydroxide solution until the pH value became slightly alkaline. The precipitated solid was filtered and dried in vacuo to yield 8.22 g of a colorless solid (35%).

$^{1}$H-NMR (400 MHz, 23°C, $CDCl_3$): 1.37-1.20 (m, 32H, $(CH_2)_{16}CH_3$), 0.88 (t, 3H, $(CH_2)_4CH_3$), 0.59 (m, 2H, $SiCH_2$), 0.12 (s, 6H, $Si(CH_3)_2$) ppm; $^{13}$C-NMR (101 MHz, 23°C, $CDCl_3$) = 33.78 (octadecylhexyl-C), 32.28 (octadecylhexyl-C), 30.06 (br, multiple octadecylhexyl-C), 30.02 (octadecylhexyl-C), 29.93 (octadecylhexyl-C), 29.73 (octadecylhexyl-C), 23.51 (octadecylhexyl-C), 23.05 (octadecylhexyl-C), 18.16 (octadecylhexyl-C), 14.48 (octadecylhexyl-C), 0.11 ($Si(CH_3)_2$) ppm.

**Synthesis of compound C3**

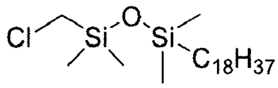

A 100 mL round bottom flask was charged with 50 mL cyclohexane, 25.0 mmol dimethyl(octadecyl)silanol and 26.3 mmol triethylamine. (Chloromethyl)dimethylchloro-silane (27.5 mmol) was added dropwise under vigorous stirring at room temperature. The reaction mixture was stirred overnight at room temperature. The mixture was filtered to remove the precipitated ammonium salt and washed twice with cyclohexane (10 mL). All volatiles were removed under reduced pressure (10 mbar) to yield 8.80 g (81 %) of the crude product as a colorless oil.

$^{1}$H-NMR (400 MHz, 23°C, $CDCl_3$): = 2.71 (s, 2H, $ClCH_2$), 1.35-1.20 (m, 32H, $(CH_2)_{16}CH_3$), 0.88 (t, 3H, $(CH_2)_4CH_3$), 0.53 (m, 2H, $SiCH_2$), 0.19 (s, 6H, $Si(CH_3)_2$), 0.07 (s, 6H, $Si(CH_3)_2$) ppm; $^{13}$C-NMR (101 MHz, 23°C, $CDCl_3$) = 33.77 ($ClCH_2$), 31.38 (octadecylhexyl-C), 30.09 (br, multiple octadecylhexyl-C), 30.05 (octadecylhexyl-C), 29.99 (octadecylhexyl-C), 29.76 (octadecylhexyl-C), 27.28 (octadecylhexyl-C), 23.56 (octadecylhexyl-C), 23.08 (octadecylhexyl-C), 18.56 (octadecylhexyl-C), 14.50 (octadecylhexyl-C), 0.61 (SiMe2), - 1.04 ($Si(CH_3)_2$) ppm.

**Preparation of initiator solution I1**

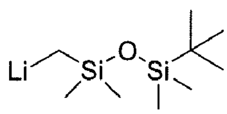

The compound **C1** (10.2 g, 42.7 mmol) was dissolved in cyclohexane (400 g) and Lithium (1.17 g, 171 mmol) were added to the solution. The mixture was stirred for 1 day at 50°C and the conversion of the lithiation of **C1** was controlled by GC. Afterwards the mixture was filtered and a concentration of the compound **I1** of 0.086 mol/kg was determined by titration.

$^{1}$H-NMR (400 MHz, 23°C, $C_6D_6$): = 0.96 (s, 9H, $SiC(CH_3)_3$), 0.36 (s, 6H, $LiCH_2Si(CH_3)_2$), 0.17 (s, 6H, $Si(CH_3)_2$), -1.42 (s, 2H, $LiCH_2$) ppm; $^{29}$Si-NMR (101 MHz, 23°C, $C_6D_6$) = 14.5 ppm.

**Preparation of initiator solution I2**

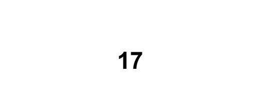

The compound **C2** (8.14 g, 20.0 mmol) was dissolved in cyclohexane (150 g) and Lithium (0.56 g, 80.0 mmol) were added to the solution. The mixture was stirred for one day at 50°C and the conversion of the lithiation of **C2** was controlled by GC. Afterwards the mixture was filtered and a concentration of the compound **I2** of 0.127 mol/kg was determined by titration.

$^{1}$H-NMR (400 MHz, 23°C, $C_6D_6$): = 1.63-1.31 (m, 24H, $(CH_2)_4CH_3$), 0.97 (t, 9H, $(CH_2)_4CH_3$), 0.93-0.87 (m, 6H, $SiCH_2$), 0.56 (br s, 6H, $Si(CH_3)_2$), -1.43 (br s, 2H, $LiCH_2$) ppm; $^{13}$C-NMR (101 MHz, 23°C, $C_6D_6$) = 34.07 (hexyl-C), 32.06 (hexyl-C), 23.90 (hexyl-C), 23.17 (hexyl-C), 16.25 (hexyl-C), 14.45 (hexyl-C), 6.03 (br, $LiCH_2$), 2.28 ($Si(CH_3)_2$) ppm.

<u>**Preparation of initiator solution I3**</u>

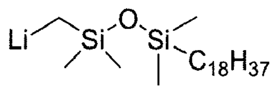

The compound **C3** (8.35 g, 19.2 mmol) was dissolved in cyclohexane (180 g) and Lithium (0.56 g, 76.7 mmol) were added to the solution. The mixture was stirred for one day at 50°C and the conversion of the lithiation of **C3** was controlled by GC. Afterwards the mixture was filtered and a concentration of the compound **I3** of 0.059 mol/kg was determined by titration.

**Copolymerization of 1,3-butadiene and styrene (polymers 1-6)**

The co-polymerizations were performed in a double wall, 10 liter steel reactor, which was first purged with nitrogen, before the addition of organic solvent, monomers, polar coordinator compound, initiator compound or other components. The polymerization reactor was tempered to 40°C, unless stated otherwise. The following components were then added in the following order: cyclohexane solvent (4600 grams); butadiene monomer, styrene monomer, TMEDA, and the mixture was stirred for one hour, followed by titration with n-BuLi to remove traces of moisture or other impurities. The polymerization initiator compound (n-BuLi, **I1-I3)** was added into the polymerization reactor to initiate the polymerization reaction. The polymerization was performed for 80 minutes, not allowing the polymerization temperature to exceed 60°C. Afterwards, 0.5% of the total butadiene monomer amount was added and after stirring for 1 minute $SnCl_4$ was added. The mixture was stirred for 20 minutes. Subsequently, 1.8% of the total butadiene monomer amount was added and stirred for 5 minutes, followed by the addition of chain-end modifier. After 20 minutes the polymerization was terminated by the addition of methanol (equimolar amount based on initiator). To the polymer solution, 0.25 wt% IRGANOX 1520 was added as a stabilizer. This mixture was stirred for 15 minutes. The resulting polymer solution was than stripped with steam for one hour to remove solvent and other volatiles, and dried in an oven at 70°C for 30 minutes and then additionally at room temperature until the moisture content is < 0.6 %. The amounts for the initiator, $SnCl_4$, chain-end modifier, TMEDA and the monomers are summarized in Table 2 and the analytical data for the resulting polymers P1-P6 are summarized in

**Table 3.**

**Table 2: Composition of Examples - amounts of reagents for polymerization**

| Polymer | n-butyllithiu m initiator or siloxysilyl initiator [mmol] | $SnCl_4$ [mmol] | Chain-end modifier [mmol] | Butadiene [mmol] | Styrene [mmol] | TMEDA [mmol] |
|---|---|---|---|---|---|---|
| 1 | (n-BuLi) 4.506 | 0.319 | (E1) 3.946 | 12.93 | 1.789 | 8.990 |
| 2 | (II) 4.427 | 0.313 | (E1) 3.964 | 12.74 | 1.762 | 8.944 |
| 3 | (I2) 4.414 | 0.325 | (E1) 3.793 | 12.70 | 1.758 | 8.828 |
| 4 | (I3) 4.423 | 0.306 | (E1) 3.771 | 12.71 | 1.758 | 8.961 |
| 5 | (n-BuLi) 4.478 | 0.343 | (E2) 3.753 | 12.86 | 1.780 | 8.939 |
| 6 | (I1) 4.428 | 0.310 | (E2) 3.748 | 12.74 | 1.763 | 8.905 |

**Table 3: Polymer data from SEC**

| Example | Mn [g/mol] | Mw [g/mol] | Mp1 [g/mol] | Mp2 [g/mol] | Mp3 [g/mol] | Coupling Rate [%] |
|---|---|---|---|---|---|---|
| 1 | 306059 | 421975 | 287384 | 638082 | 999034 | 23.1 |
| 2 | 298743 | 421616 | 292635 | 753580 | 957514 | 22.2 |
| 3 | 306877 | 427552 | 309607 | 959107 | - | 20.9 |
| 4 | 439987 | 753221 | 515812 | 1247304 | - | 29.0 |
| 5 | 303955 | 436495 | 296855 | 628134 | 977573 | 25.7 |
| 6 | 295288 | 427912 | 301598 | 653714 | 969201 | 23.7 |

**Table 4: Polymer characterizations**

| Example | Mooney viscosity [MU] | Vinyl content[A] [wt%] | Styrene content[B] [wt%] |
|---|---|---|---|
| 1 | 56.8 | 62.8 | 20.5 |
| 2 | 57.2 | 61.9 | 21.0 |
| 3 | 57.9 | 61.7 | 20.9 |
| 4 | 108.8 | 61.6 | 21.1 |
| 5 | 61.0 | 62.6 | 20.5 |
| 6 | 60.7 | 61.0 | 20.7 |

A: vinyl content is that of the 1,2-polybutadiene unit content of the final copolymer, and is determined by IR spectroscopy
B: styrene content of the final copolymer, and is determined by IR spectroscopy

**Polymer compositions**

Polymer compositions were prepared by combining the compounds listed in Table 5 or Table 8 below, in a 380 mL internal batch mixer (Brabender 350S) and vulcanized at 160°C according to TC 95, respective times required to achieve 95% conversion of the crosslinking reaction. Vulcanization process data and physical properties are summarized in Table 6, Table 7, Table 9 or Table 10.

**Table 5: Polymer Composition using polymers 1-3**

| **Components** | | **Compounds[a]** | | |
|---|---|---|---|---|
| | | **1A** | **2A** | **3A** |
| **1st mixing stage** | | | | |
| SSBR | 1 | 80 | - | - |
| | 2 | - | 80 | - |
| | 3 | - | - | 80 |
| High cis 1,4-polybutadiene [b] | | 20 | 20 | 20 |
| Precipitated silica [c] | | 80 | 80 | 80 |
| Silane [d] | | 6.9 | 6.9 | 6.9 |
| Stearic acid [e] | | 1.0 | 1.0 | 1.0 |
| Stabilizer system:<br>Antilux 654 [f]<br>Dusantox 6PPD [g] | | <br>2.0<br>1.5 | <br>2.0<br>1.5 | <br>2.0<br>1.5 |
| Zinc oxide [h] | | 2.5 | 2.5 | 2.5 |

(continued)

| Components | Compounds[a] | | |
|---|---|---|---|
| | 1A | 2A | 3A |
| **1st mixing stage** | | | |
| Softener (TDAE [i]) | 20 | 20 | 20 |
| **2nd mixing stage** | | | |
| Sulfur [j] | 1.4 | 1.4 | 1.4 |
| Accelerator (TBBS[k]) | 1.5 | 1.5 | 1.5 |
| DPG [l] | 1.5 | 1.5 | 1.5 |

*a* phr = parts per hundred rubber, based on sum weight of the styrene butadiene copolymer and high cis 1,4-polybutadiene
*b* Buna cis 132-Schkopau from Styron Deutschland GmbH
*c* Ultrasil 7000GR, Evonic Industries AG
*d* Si 75 (Bis(triethoxysilylpropyl)disulfan, sulfur equivalents per molecule: 2.35), Evonic Industries AG
*e* Cognis GmbH
*f* Light & ozone protective wax, Rhein Chemie Rheinau GmbH
*g* N-(1,3-dimethylbutyl)-N'-phenyl-1,4-benzenediamine, Duslo, a.s.
*h* Grillo-Zinkoxid GmbH
*i* VivaTec 500, Hansen & Rosenthal KG
*j* Solvay AG
*k* N-tert-Butyl-2-benzothiazyl-sulfenamide; Rhein Chemie Rheinau GmbH
*l* Diphenylguanidine, Vulkacit D, Lanxess AG

**Table 6: Vulcanization Process Data & Silica Containing Polymer Vulcanizate Composition Property**

| Compound | Compound Mooney [Mu] | TS 1 [min] | TS 2 [min] | TC 50 [min] | TC 90 [min] | TC 95 [min] | Heat build-up [°C] | DIN abrasion $mm^3$ |
|---|---|---|---|---|---|---|---|---|
| 1A | 81.3 | 0.7 | 2.4 | 6.3 | 15.1 | 20.0 | 114.4 | 147 |
| 2A | 81.6 | 0.7 | 2.4 | 6.2 | 14.8 | 19.8 | 116.2 | **135** |
| 3A | 82.0 | 0.7 | 2.2 | 6.1 | 15.1 | 20.0 | 115.7 | **132** |

**Table 7: Silica Containing Polymer Vulcanizate Composition Properties**

| Compound | Tensile Strength [MPa] | Elongation at Break [%] | Rebound resilience @ 0°C | Rebound resilience @ 60°C | Tan $\delta$ at @ 0°C | Tan $\delta$ at 60°C |
|---|---|---|---|---|---|---|
| 1A | 16.1 | 347 | 14.6 | 63.5 | 0.403 | 0.137 |
| 2A | **18.4** | 383 | 14.6 | 62.1 | **0.457** | 0.135 |
| 3A | **18.0** | 381 | 15.5 | 62.4 | **0.438** | 0.132 |

**Table 8: Polymer Composition using polymers 1-3**

| **Components** | | **Compounds**[a] | | |
|---|---|---|---|---|
| | | **1B** | **2B** | **3B** |
| **1st mixing stage** | | | | |
| SSBR | 1 | 100 | - | - |
| | 2 | - | 100 | - |
| | 3 | - | - | 100 |
| Carbon black[b] | | 50 | 50 | 50 |
| Stearic acid[c] | | 1.5 | 1.5 | 1.5 |
| Zinc oxide[d] | | 3.0 | 3.0 | 3.0 |
| Softener (TDAE[e]) | | 15 | 15 | 15 |
| **2nd mixing stage** | | | | |
| Sulfur[f] | | 1.75 | 1.75 | 1.75 |
| Accelerator (TBBS[g]) | | 1.0 | 1.0 | 1.0 |

*a* Values given in parts of hundred rubber based on weight of the styrene butadiene copolymer
*b* IRB 8, international ref. carbon black, Sid Richardson
*c* Cognis GmbH
*d* Grillo-Zinkoxid GmbH
*e* VivaTec 500, Hansen & Rosenthal KG
*f* Solvay AG
*g* N-tert-Butyl-2-benzothiazyl-sulfenamide; Rhein Chemie Rheinau GmbH

**Table 9: Vulcanization Process Data & Carbon Black Containing Polymer Vulcanizate Composition Property**

| Compound | Compound Mooney [Mu] | TS 1 [min] | TS 2 [min] | TC 50 [min] | TC 90 [mi ] | TC 95 [min] | Heat build-up [°C] | DIN abrasion $mm^3$ |
|---|---|---|---|---|---|---|---|---|
| 1B | 76.9 | 6.9 | 9.2 | 12.3 | 19.4 | 22.6 | 99.1 | 229 |
| 2B | 77.6 | 6.9 | 9.2 | 12.3 | 19.5 | 22.7 | 98.6 | **187** |
| 3B | 77.7 | 6.8 | 9.1 | 12.3 | 19.4 | 22.6 | 100.5 | **197** |

**Table 10: Carbon Black Containing Polymer Vulcanizate Composition Properties**

| Compound | Tensile Strength [MPa] | Elongation at Break [%] | Rebound resilience @ 0°C | Rebound resilience @ 60°C | Tan $\delta$ at 60°C |
|---|---|---|---|---|---|
| 1B | 16.2 | 425 | 4.6 | 62.7 | 0.118 |
| 2B | **21.1** | **537** | 4.6 | 63.0 | 0.119 |

It was found that polymer compositions of the invention when used for the preparation of crosslinked (reinforced silica or carbon black) polymer compositions (see for example 2A or 2B in Table 6, Table 7, Table 9 or Table 10) have a relatively increased abrasion resistance, a relatively increased tensile strength and a relatively increased elongation at break when compared with crosslinked rubber compositions made of an polymer composition not made according to the invention (see for example 1A or 1B in Table 6, Table 7, Table 9 or Table 10). In addition, the performance characteristics, particularly rolling resistance measured as tan delta @ 60°C, heat build-up and wet grip, measured as tan delta @ 0°C of the crosslinked inventive polymer compositions are in a comparable order when compared with modified polymers not according to the invention.

A polymer composition of the invention may be converted into a crosslinked polymer composition by first stage

mixing (mixing step in which silica or carbon black filler and other ingredients are added to polymer) and second stage mixing (mixing step in which the crosslinking agent is added to the polymer composition) according to Table 5 or Table 8, followed by crosslinking at 160°C for 20 min (TC 95) as described herein. The polymer compositions and crosslinked polymer compositions (as listed in Table 5 or Table 8), prepared under identical conditions at the same day by the identical operator, are identified with a capital letter, e.g. A or B. The polymer contained in the crosslinked polymer composition is identified by the polymer number, e.g. 1, 2, or 3. As a result, there are crosslinked polymer composition series, such as 1A, 2A or 3A which can be directly compared with each other.

Increased values of "Tensile Strength" and "Elongation at Break" result in an improved tear strength, handling and chip and chunking of the crosslinked polymer composition applied to tire applications. "Tan $\delta$ at 0°C" values correlate with the grip property on a wet surface, with a higher value corresponding to a higher wet grip. Heat build-up, "Rebound resilience at 60°C" and "Tan $\delta$ at 60°C" values of crosslinked rubber compositions according to the invention are not or not significantly deteriorated in comparison with crosslinked polymer compositions not according to the invention.
To demonstrate the benefit of the invention in more detail, some further examples are given.

The polymer of example 2 (Table 2,

Table **3** and Table 4) was made by the polymerization of 1,3-butadiene and styrene with initiator compound I1 to obtain living styrene-butadiene polymer chains which were subsequently modified by the reaction with the modifier E1. Polymer 2 was used to prepare an inventive filler-containing polymer composition 2A (Table 5 or Table 8). Example 2A has a significantly lower DIN abrasion and an increased tensile strength and elongation at break, when compared with the non-inventive polymer composition 1A, comprising a non-inventive polymer which was made under the same procedure but not applying the initiator compound I1 (Table 5 or Table 8).

## Claims

1. A process for the preparation of an elastomeric polymer, said process comprising steps (i) and (ii):

    (i) providing and (ii) polymerizing at least one conjugated diene monomer and, optionally, one or more aromatic vinyl monomer in the presence of a polymerization initiator according to Formula 1:

    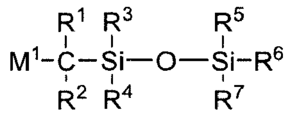

    (Formula 1)

    wherein in Formula 1: M1 is selected from lithium, sodium and potassium; R1 and R2 are each independently selected from hydrogen, (C1-C18) alkyl, (C6-C18) aryl and (C7-C18) alkylaryl; R3, R4, R5, R6 and R7 are each independently selected from (C1-C18) alkyl, (C6-C18) aryl and (C7-C18) alkylaryl;
    to provide a living polymer chain.

2. The process according to claim 1, wherein the process comprises the additional step (iii):

    (iii) adding a chain end modifying agent.

3. The process according to claim 2, wherein the chain end modifying agent comprises a compound according to any of formulae (3) to (11):

    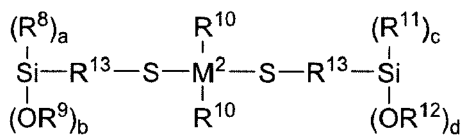

    Formula 3

wherein in formula 3:

M2 is a silicon atom or a tin atom;
R13 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;
R9 and R12 are each independently selected from (C1-C4) alkyl;
R8, R10, and R11 are each independently selected from (C1-C18) alkyl, (C6-C18) aryl and (C7-C18) alkylaryl;
a and c are each independently selected from 0, 1 and 2; b and d are each independently selected from 1, 2 and 3; with the proviso that a+b=3, and c+d=3;

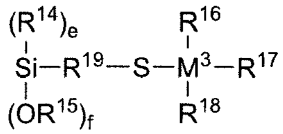

Formula 4

wherein in formula 4:
M3 is a silicon atom or a tin atom;
R19 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;
R15 is independently selected from (C1-C4) alkyl, (C6-C18) aryl and (C7-C18) alkylaryl;
R16, R17 and R18 are each independently selected from (C1-C18) alkyl, (C1-C18) alkoxy, (C6-C18) aryl and (C7-C18) alkylaryl;
R19 is independently selected from (C1-C18) alkyl, (C1-C18) alkoxy, (C6-C18) aryl, (C7-C18) alkylaryl and R18-(C2H4O)g-O-, wherein R18 is selected from (C5-C23) alkyl, (C5-C23) alkoxy, (C6-C18) aryl and (C7-C25) alkylaryl and g is selected from 4, 5 and 6;
e is selected from 0, 1 and 2; f is selected from 1, 2 and 3; with the proviso that e+f=3;

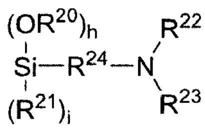

Formula 5

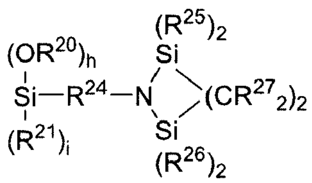

Formula 6

wherein in Formula 5 and Formula 6:
R24 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl; R20 is independently selected from (C1-C4) alkyl, (C6-C18) aryl and (C7-C18) alkylaryl;
R25, R26 and R27 are each independently selected from (C1-C18) alkyl, (C1-C18) alkoxy, (C6-C18) aryl and (C7-C18) alkylaryl;
R21 is independently selected from (C1-C18) alkyl, (C1-C18) alkoxy, (C6-C18) aryl, (C7-C18) alkylaryl and R43-(C2H4O)j-O-, wherein R43 is selected from (C5-C23) alkyl, (C5-C23) alkoxy, (C6-C18) aryl and (C7-C25) alkylaryl; and j is selected from the 4, 5 and 6;
R22 and R23 are independently selected from (C1-C16) alkyl and -SiR28R29R30, wherein R28, R29 and R30

are independently selected from (C1-C16) alkyl, (C6-C18) aryl and (C7-C18) alkylaryl; i is selected from 0, 1 and 2; h is selected from 1, 2 and 3; and with the proviso that i+h=3;

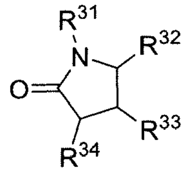

Formula 7

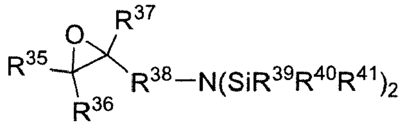

Formula 8

wherein in Formula 7 and Formula 8:

R31, R32, R33, R34, R35, R36, R37, R39, R40 and R41 are each independently selected from hydrogen, (C1-C16) alkyl, (C6-C16) aryl and (C7-C16) alkylaryl; and

R38 is at least divalent and is selected from (C6-C18) aryl, (C7-C18) alkylaryl and (C1-C18) alkyl, wherein each group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;

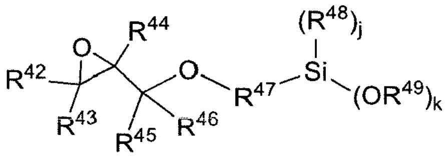

Formula 9

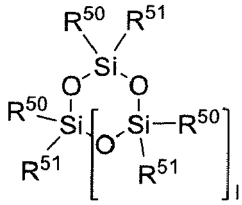

Formula 10

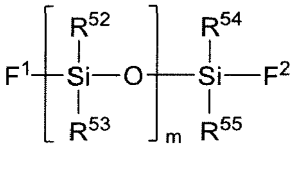

Formula 11

wherein in Formula 9, in Formula 10 and in Formula 11: R42, R43, R44, R45, R46, R48, R50, R51, R52, R53, R54 and R55 are each independently selected from hydrogen, (C1-C16) alkyl, (C6-C16) aryl and (C7-C16) alkylaryl;

R49 is selected from (C1-C4) alkyl, (C6-C18) aryl and (C7-C18) alkylaryl;

R47 is at least divalent and is selected from (C6-C18) aryl, (C7-C18) alkylaryl and (C1-C18) alkyl, wherein each

group is optionally substituted with one or more groups selected from di(C1-C7 hydrocarbyl)amino, bis(tri(C1-C12 alkyl)silyl)amino, tris(C1-C7 hydrocarbyl)silyl, (C7-C18) alkylaryl and (C6-C18) aryl;
j is selected from 0, 1 and 2; k is selected from 1, 2 and 3; with the proviso that k+l=3; and 1 is selected from 1 to 20; F1 and F2 are independently selected from hydrogen, hydroxy, chlorine, bromine, iodine, -SiR52R53R54, wherein R52, R53, R54 are the same or different and are as defined above, vinyl, (C6-C16) aryl, (C7-C16) alkylaryl and (C1-C16) alkyl, wherein each hydrocarbyl group is optionally substituted with one or more groups selected from hydroxyl, di(C1-C7 hydrocarbyl)amino, bis(tri(C1-C12 alkyl)silyl)amino and an epoxy group.

**4.** The process according to any of the preceding claims, wherein the at least one conjugated diene monomer is selected from 1,3-butadiene, 2-alkyl-1,3-butadiene, 2-methyl-1,3-butadiene, 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and/or 1,3-cyclooctadiene

**5.** The process according to any of the preceding claims, wherein the aromatic vinyl monomer is selected from the group consisting of styrene, C1-4 alkyl-substituted styrene, such as 2-methylstyrene, 3-methylstyrene, 4-methylstyrene, 2,4-dimethylstyrene, 2,4,6-trimethylstyrene, -methylstyrene and stilbene, 2,4-diisopropylstyrene, 4-tert-butylstyrene, vinyl benzyl dimethylamine, (4-vinylbenzyl)dimethyl aminoethyl ether, N,N-dimethylaminoethyl styrene, tert-butoxystyrene and vinylpyridine and a combination of two or more thereof.

**6.** The process according to any of the preceding claims, wherein step (ii) is carried out in an organic solvent and wherein the organic solvent is preferably selected from one or more of butene, butane, pentane, cyclohexane, hexane, heptane, octane, benzene and toluene, preferably from one or more of butane, pentane, cyclohexane, hexane, and heptane.

**7.** The process according to any of the preceding claims, wherein M1 in formula 1 is lithium and R1 and R2 in formula 1 are independently selected from hydrogen and (C1-C18) alkyl.

**8.** The process according to any of the preceding claims, wherein the polymerization initiator according to formula 1 is selected from the following group of compounds:

Li-$(CH_2)$-Si$(Me)_2$-O-Si$(Me)_3$, Li-$(CH_2)$-Si$(Me)_2$-O-Si$(Et)_3$, Li-$(CH_2)$-Si$(Me)_2$-O-Si$(Pr)_3$, Li-$(CH_2)$-Si$(Me)_2$-O-Si$(Bu)_3$, Li-$(CH_2)$-Si $(Me)_2$-O-Si$(C_6H_{13})_3$, Li- $(CH_2)$-Si $(Me)_2$-O-Si$(Ph)_3$, Li-$(CH_2)$-Si$(Me)_2$-O-Si$(CH_2Ph)_3$, Li-$(CH_2)$-Si$(Me)_2$-O-Si$(Me)_2$(Et), Li-$(CH_2)$-Si$(Me)_2$-O-Si$(Me)_2$(Pr), Li-$(CH_2)$-Si$(Me)_2$-O-Si$(Me)_2$(Bu), Li-$(CH_2)$-Si$(Me)_2$-O-Si$(Me)_2$$(C_6H_{13})$, Li-$(CH_2)$-Si$(Me)_2$-O-Si$(Me)_2$$(C_8H_{17})$, Li-$(CH_2)$-Si $(Me)_2$-O-Si$(Me)_2$$(C_{10}H_{21})$, Li-$(CH_2)$-Si$(Me)_2$-O-Si$(Me)_2$$(C_{12}H_{25})$, Li-$(CH_2)$-Si$(Me)_2$-O-Si$(Me)_2$$(C_{18}H_{37})$, Li-$(CH_2)$-Si$(Me)_2$-O-Si$(Me)_2$$(C_6H_{11})$, Li-$(CH_2)$-Si$(Me)_2$-O-Si$(Me)_2$(Ph), Li-$(CH_2)$-Si$(Me)_2$-O-Si$(Me)_2$$(CH_2Ph)$, Li-$(CH_2)$-Si$(Me)_2$-O-Si(Me)2$[(CH_2)_2Ph]$, Li-$(CH_2)$-Si$(Me)_2$-O-Si$(Me)_2$$[(CH_2)_3Ph]$, Li-$(CH_2)$-Si$(Me)_2$-O-Si(Me)$(Pr)_2$, Li-$(CH_2)$-Si$(Me)_2$-O-Si(Me)$(Bu)_2$, Li-$(CH_2)$-Si$(Me)_2$-O-Si(Me)$(C_6H_{11})_2$, Li-$(CH_2)$-Si$(Me)_2$-O-Si$(Et)_2$(Pr), Li-$(CH_2)$-Si$(Me)_2$-O-Si$(Et)_2$(Bu), Li-$(CH_2)$-Si$(Me)_2$-O-Si$(Et)_2$(Ph), Li-$(CH_2)$-Si$(Me)_2$-O-Si$(Pr)_2$$(C_{18}H_{37})$, Li-$(CH_2)$-Si$(Me)_2$-O-Si$(Bu)_2$$(C_{18}H_{37})$, Li-$(CH_2)$-Si$(Me)_2$-O-Si(Me)$(Ph)_2$, and Li-$(CH_2)$-Si$(Me)_2$-O-Si(Bu)$(Ph)_2$.

**9.** An elastomeric polymer obtainable according to any of the preceding claims.

**10.** A composition comprising the elastomeric polymer according to claim 9.

**11.** The composition according to claim 10, further comprising oil and/or a filler.

**12.** The composition according to claim 10 or 11, further comprising a vulcanizing agent.

**13.** The composition according to any of claims 10 to 12, wherein the filler is selected from one or more of carbon black, carbon nanotubes, graphite, graphene, silica, carbon-silica dual phase fillers, clay, calcium carbonate, magnesium carbonate, lignin, and amorphous fillers.

**14.** A process for the preparation of a crosslinked elastomeric polymer, comprising step (iv) of:

(iv) adding a vulcanizing agent to the elastomeric polymer according to claim 9 or to the composition according to any of claims 10 to 13; and cross-linking the elastomeric polymer.

**15.** A crosslinked elastomeric polymer obtainable according claim 14.

**16.** A composition comprising the crosslinked elastomeric polymer according to claim 15.

**17.** An article comprising the composition according to any of claims 10 to 13 or 16.

**18.** The article according to claim 17, wherein the article is a tire tread, a tire side wall, a conveyer belt, a seal or a hose.

**19.** Polymerization initiator having a structure according to Formula 1:

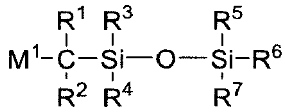

(Formula 1)

wherein in Formula 1: M1 is selected from lithium, sodium and potassium; R1 and R2 are each independently selected from hydrogen, (C1-C18) alkyl, (C6-C18) aryl and (C7-C18) alkylaryl; R3, R4, R5, R6 and R7 are each independently selected from (C1-C18) alkyl, (C6-C18) aryl and (C7-C18) alkylaryl.

Europäisches Patentamt
European Patent Office
Office européen des brevets

# EUROPEAN SEARCH REPORT

Application Number
EP 15 18 1760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/099148 A1 (HSU WEN-LIANG [US] ET AL) 25 July 2002 (2002-07-25)<br>* examples 1,3,4 *<br>* claims 1,2,5,6,10,12-17 *<br>----- | 1-19 | INV.<br>C08F236/06<br>C08F4/48<br><br>ADD.<br>C08F212/08 |
| A | US 5 416 168 A (WILLIS CARL L [US] ET AL) 16 May 1995 (1995-05-16)<br>* examples 5-7 *<br>* claims 1-15 *<br>----- | 1-19 | |
| A | WO 2011/082277 A1 (BRIDGESTONE CORP [JP]; LAWSON DAVID F [US]; HOGAN TERRENCE E [US]; RAD) 7 July 2011 (2011-07-07)<br>* examples 1-5 *<br>* claims 1-20 *<br>----- | 1-19 | |
| A | WO 2015/010710 A1 (STYRON EUROPE GMBH [CH]) 29 January 2015 (2015-01-29)<br>* page 61 - page 66 *<br>* claims 1-24 *<br>----- | 1-19 | TECHNICAL FIELDS SEARCHED (IPC) |
| A | ERICKA L. LYSZAK ET AL: "Zirconium compounds of hexamethyldisiloxane. Synthesis and structure of (.eta.5-C5H5)2Zr(CH2SiMe2OSiMe3)2 and (.eta.5-C5Me5)ZrCl2(.eta.2-CH2SiMe2OSiMe3) and their reactivity with methyl isocyanide",<br>ORGANOMETALLICS,<br>vol. 12, no. 2,<br>1 February 1993 (1993-02-01), pages 338-342, XP55251895,<br>US<br>ISSN: 0276-7333, DOI: 10.1021/om00026a019<br>* page 338, right column, experimental section *<br>----- | 19 | C08F<br>C08L |

The present search report has been drawn up for all claims

1

| Place of search | Date of completion of the search | Examiner |
|---|---|---|
| Munich | 22 February 2016 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 18 1760

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2016

| Patent document cited in search report | Publication date | Patent family member(s) | Publication date |
|---|---|---|---|
| US 2002099148 A1 | 25-07-2002 | NONE | |
| US 5416168 A | 16-05-1995 | AT 195328 T | 15-08-2000 |
| | | BR 9501265 A | 31-10-1995 |
| | | CN 1112939 A | 06-12-1995 |
| | | DE 69518266 D1 | 14-09-2000 |
| | | DE 69518266 T2 | 22-02-2001 |
| | | EP 0675140 A1 | 04-10-1995 |
| | | ES 2149919 T3 | 16-11-2000 |
| | | JP H07268012 A | 17-10-1995 |
| | | KR 100367571 B1 | 04-03-2003 |
| | | RU 95104883 A | 10-01-1997 |
| | | TW 321674 B | 01-12-1997 |
| | | US 5416168 A | 16-05-1995 |
| | | ZA 9502554 A | 30-11-1995 |
| WO 2011082277 A1 | 07-07-2011 | CN 102781969 A | 14-11-2012 |
| | | EP 2519548 A1 | 07-11-2012 |
| | | JP 5551796 B2 | 16-07-2014 |
| | | JP 5841193 B2 | 13-01-2016 |
| | | JP 2013516421 A | 13-05-2013 |
| | | JP 2014205840 A | 30-10-2014 |
| | | KR 20120101726 A | 14-09-2012 |
| | | US 2013066008 A1 | 14-03-2013 |
| | | WO 2011082277 A1 | 07-07-2011 |
| WO 2015010710 A1 | 29-01-2015 | TW 201512206 A | 01-04-2015 |
| | | WO 2015010710 A1 | 29-01-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007047943 A
- WO 2009148932 A
- US 20050159513 A
- US 6693160 B
- US 6627715 B
- US 6489415 B
- US 6103842 A
- US 5753579 A
- US 5086136 A
- US 3629213 A
- US 6310152 B
- US 5834573 A
- US 5753761 A
- US 5448002 A
- US 5089574 A
- US 20030065114 A
- EP 1367069 A
- JP 11301794 B
- US 3951936 A
- EP 0964008 A
- EP 0924214 A
- US 6184168 B
- US 6018007 A
- US 4931376 A
- US 5134199 A
- US 4689368 A


### Non-patent literature cited in the description


- **TANAKA et al.** *Polymer,* 1981, vol. 22, 1721-1723
- Rubber Handbook. The Swedish Institution of Rubber Technology, 2000
- **WERNER KLEEMANN ; KURT WEBER.** Elastverarbeitung-Kennwerte und Berechnungsmethoden. Deutscher Verlag fur Grundstoffindustrie, 1990
- **KIRK-OTHMER.** Encyclopedia of Chemical technology. Wiley Interscience, 1982, vol. 20, 365-468
- Vulcanizing Agents and Auxiliary Materials. 390-402